# EUROPÄISCHE PATENTANMELDUNG

(11) **EP 3 372 881 A1**
(43) Veröffentlichungstag der Anmeldung: **12.09.2018**
(21) Anmeldenummer: 17159728.9
(22) Anmeldetag: 07.03.2017
(51) Int. Cl.: F16K 37/00, F16K 51/02, F16K 3/10, F16K 31/04, F16K 3/32, G05D 7/06

(54) **OPTIMIERTE DRUCKREGELUNG FÜR UND MIT EINEM VAKUUMVENTIL**

(71) Anmelder: VAT Holding AG, 9469 Haag (CH)
(72) Erfinder: MADLENER, Wolfgang, 9470 Buchs (CH); MARUGG, Leo, 9466 Sennwald (CH); SONDEREGGER, Harald, 6835 Batschuns (AT)
(74) Vertreter: Kaminski Harmann

(57) **Zusammenfassung**

Ventilsystem aus einem Vakuumventil (10) und einer Regel- und Steuerungseinheit (11), wobei das Vakuumventil einen Ventilsitz, der eine eine Öffnungsachse (34) definierende Ventilöffnung (33) und eine die Ventilöffnung umlaufende erste Dichtfläche (35) aufweist, einen Ventilverschluss (38) zum Verschliessen der Ventilöffnung mit einer zweiten Dichtfläche und eine mit dem Ventilverschluss gekoppelte Antriebseinheit (40) aufweist, die derart ausgebildet ist, dass der Ventilverschluss zur Bereitstellung von jeweiligen Verschlusspositionen definiert variierbar ist. Die Regel- und Steuerungseinheit ist zur Ausführung eines Regelzyklus mit einem Vorregelschritt (53a) und einem Regelschritt (53b) für den Ventilverschluss konfiguriert, wobei im Rahmen des Vorregelschritts (53a) der Ventilverschluss in eine definierte aktuelle Vorregelposition versetzt wird und im Rahmen des Regelschritts (53b) eine gezielte Variation der Verschlussposition basierend auf einer aktuell bestimmten Regelgrösse und auf einer Zielgrösse ausgeführt wird. Die Regel- und Steuerungseinheit weist eine Aktualisierungsfunktionalität auf, bei deren Ausführung die Regelgrösse zumindest während eines Teils des Regelzyklus erfasst und ein Istregelverlauf (51) abgeleitet wird, der Istregelverlauf (51) mit einem Referenzregelverlauf verglichen und eine Regelabweichung abgeleitet wird, eine Anpassung der aktuellen Vorregelposition erfolgt und die angepasste Vorregelposition als die aktuelle Vorregelposition für den Regelzyklus bereitgestellt wird.

## Beschreibung

Die Erfindung betrifft ein System aus einem Vakuumregelventil und einer Steuer- und Regeleinheit für den druckgeregelten Betrieb eines Bearbeitungsprozesses unter Vakuumbedingungen.

Allgemein sind Vakuumventile zur Regelung eines Volumen- oder Massenstroms und zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt und kommen insbesondere bei Vakuumkammersystemen im Bereich der IC-, Halbleiter- oder Substratfertigung, die in einer geschützten Atmosphäre möglichst ohne das Vorhandensein verunreinigender Partikel stattfinden muss, zum Einsatz. Derartige Vakuumkammersysteme umfassen insbesondere mindestens eine zur Aufnahme von zu bearbeitenden oder herzustellenden Halbleiterelementen oder Substraten vorgesehene, evakuierbare Vakuumkammer, die mindestens eine Vakuumkammeröffnung besitzt, durch welche die Halbleiterelemente oder anderen Substrate in die und aus der Vakuumkammer führbar sind, sowie mindestens eine Vakuumpumpe zum Evakuieren der Vakuumkammer. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozess-Vakuumkammern, in denen die innerhalb der Prozess-Vakuumkammern befindlichen Teile mittels jeweils einer Bearbeitungsvorrichtung bearbeitet werden. Sowohl während des Bearbeitungsprozesses innerhalb der Prozess-Vakuumkammern, als auch während des Transports von Kammer zu Kammer müssen sich die hochsensiblen Halbleiterelemente oder Substrate stets in geschützter Atmosphäre - insbesondere in luftleerer Umgebung - befinden.

Hierfür kommen zum einen Peripherieventile zum Öffnen und Schliessen einer Gaszu- oder -abfuhr und zum anderen Transferventile zum Öffnen und Schliessen der Transferöffnungen der Vakuumkammern für das Ein- und Ausführen der Teile zum Einsatz.

Die von Halbleiterteilen durchlaufenen Vakuumventile werden aufgrund des beschriebenen Anwendungsgebiets und der damit verbundenen Dimensionierung als Vakuum-Transferventile, aufgrund ihres mehrheitlich rechteckigen Öffnungsquerschnitts auch als Rechteckventil und aufgrund ihrer üblichen Funktionsweise auch als Schieberventil, Rechteckschieber oder Transferschieberventil bezeichnet.

Peripherieventile werden insbesondere zur Steuerung oder Regelung des Gasflusses zwischen einer Vakuumkammer und einer Vakuumpumpe oder einer weiteren Vakuumkammer eingesetzt. Peripherieventile befinden sich beispielsweise innerhalb eines Rohrsystems zwischen einer Prozess-Vakuumkammer oder einer Transferkammer und einer Vakuumpumpe, der Atmosphäre oder einer weiteren Prozess-Vakuumkammer. Der Öffnungsquerschnitt derartiger Ventile, auch Pumpenventile genannt, ist in der Regel kleiner als bei einem Vakuum-Transferventil. Da Peripherieventile abhängig vom Einsatzgebiet nicht nur zum vollständigen Öffnen und Schliessen einer Öffnung, sondern auch zum Steuern oder Regeln eines Durchflusses durch kontinuierliches Verstellen des Öffnungsquerschnitts zwischen eine vollständigen Offenstellung und einer gasdichten Geschlossenstellung eingesetzt werden, werden sie auch als Regelventile bezeichnet. Ein mögliches Peripherieventil zur Steuerung oder Regelung des Gasflusses ist das Pendelventil.

Bei einem typischen Pendelventil, wie beispielsweise aus der US 6,089,537 (Olmsted) bekannt, wird in einem ersten Schritt ein in der Regel runder Ventilteller über eine in der Regel ebenfalls runde Öffnung von einer die Öffnung freigebenden Stellung in eine die Öffnung überdeckende Zwischenstellung rotatorisch geschwenkt. Im Falle eines Schieberventils, wie beispielsweise in der US 6,416,037 (Geiser) oder der US 6,056,266 (Blecha) beschrieben, ist der Ventilteller, wie auch die Öffnung, meist rechteckig ausgebildet und wird in diesem ersten Schritt linear von einer die Öffnung freigebenden Stellung in eine die Öffnung überdeckende Zwischenstellung geschoben. In dieser Zwischenstellung befindet sich der Ventilteller des Pendel- oder Schieberventils in einer beabstandeten Gegenüberlage zu dem die Öffnung umgebenden Ventilsitz. In einem zweiten Schritt wird der Abstand zwischen dem Ventilteller und dem Ventilsitz verkleinert, so dass der Ventilteller und der Ventilsitz gleichmässig aufeinander gedrückt werden und die Öffnung im Wesentlichen gasdicht verschlossen wird. Diese zweite Bewegung erfolgt vorzugsweise im Wesentlichen in eine senkrechte Richtung zum Ventilsitz. Die Abdichtung kann z.B. entweder über einen auf der Verschlussseite des Ventiltellers angeordneten Dichtungsring, der auf den die Öffnung umlaufenden Ventilsitz gepresst wird, erfolgen, oder über einen Dichtungsring auf dem Ventilsitz, gegen den die Verschlussseite des Ventiltellers gedrückt wird. Durch den in zwei Schritten erfolgenden Schliessvorgang wird der Abdichtring zwischen dem Ventilteller und dem Ventilsitz kaum Scherkräften, die den Abdichtring zerstören würden, unterworfen, da die Bewegung des Ventiltellers im zweiten Schritt im Wesentlichen geradlinig senkrecht auf den Ventilsitz stattfindet.

Unterschiedliche Dichtvorrichtungen sind aus dem Stand der Technik bekannt, beispielsweise aus der US 6,629,682 B2 (Duelli). Ein geeignetes Material für Dichtungsringe und Dichtungen bei Vakuumventilen ist beispielsweise Fluorkautschuk, auch FKM genannt, insbesondere das unter dem Handelsnamen "Viton" bekannte Fluorelastomer, sowie Perfluorkautschuk, kurz FFKM.

Aus dem Stand der Technik sind unterschiedliche Antriebssysteme zur Erzielung diese Kombination einer beim Pendelventil rotatorischen und beim Schieberventil translatorischen Bewegung des Ventiltellers parallel über die Öffnung und einer im Wesentlichen translatorischen Bewegung senkrecht auf die Öffnung bekannt, beispielsweise aus der US 6,089,537 (Olmsted) für ein Pendelventil und aus der US 6,416,037 (Geiser) für ein Schieberventil.

Das Anpressen des Ventiltellers auf den Ventilsitz muss derart erfolgen, dass sowohl die geforderte Gasdichtigkeit innerhalb des gesamten Druckbereichs sichergestellt ist, als auch eine Beschädigung des Abdichtmediums, insbesondere des Abdichtrings in Form eines O-Rings, durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers vor. Besonders bei grossen Druckschwankungen oder dem Wechsel von Unterdruck auf Überdruck, oder umgekehrt, ist eine gleichmässige Kraftverteilung entlang des gesamten Umfangs des Abdichtrings jedoch nicht immer gewährleistbar. Generell wird angestrebt, den Abdichtring von Abstützkräften, die sich aus dem an das Ventil anliegenden Druck ergeben, zu entkoppeln. In der US 6,629,682 (Duelli) wird hierzu z.B. ein Vakuumventil mit einem Abdichtmedium vorgeschlagen, das sich aus einem Abdichtring und einem danebenliegenden Abstützring zusammensetzt, so dass der Abdichtring von Abstützkräften im Wesentlichen befreit ist.

Um die geforderte Gasdichtigkeit, gegebenenfalls sowohl für Über- als auch Unterdruck, zu erreichen, sehen zusätzlich oder alternativ zum zweiten Bewegungsschritt manche bekannte Pendelventile oder Schieberventile einen senkrecht zum Ventilteller verschiebbaren, die Öffnung umgebenden Ventilring vor, der zum gasdichten Schliessen des Ventils auf den Ventilteller gedrückt wird. Derartige Ventile mit relativ zum Ventilteller aktiv verschiebbaren Ventilringen sind beispielsweise aus der DE 1 264 191 B1, der DE 34 47 008 C2, der US 3,145,969 (von Zweck) und der DE 77 31 993 U bekannt. In der US 5,577,707 (Brida) wird ein Pendelventil mit einem eine Öffnung aufweisenden Ventilgehäuse und einem parallel über die Öffnung schwenkbaren Ventilteller zum Steuern eines Durchflusses durch die Öffnung beschrieben. Ein Ventilring, der die Öffnung umschliesst, ist senkrecht in Richtung zum Ventilteller mittels mehrerer Federn und Druckluftzylinder aktiv bewegbar. Eine mögliche Weiterentwicklung dieses Pendelventils wird in der US 2005/0067603 A1 (Lucas et al.) vorgeschlagen.

Da oben genannte Ventile unter anderem bei der Herstellung hochsensibler Halbleiterelemente zum Einsatz kommen, muss die insbesondere durch die Betätigung des Ventils und durch die mechanische Belastung des Ventilverschlussgliedes verursachte Partikelgenerierung und die Anzahl der freien Partikel im Ventilraum möglichst gering gehalten werden. Die Partikelgenerierung ist primär eine Folge von Reibung beispielsweise durch Metall-Metall-Kontakt und durch Abrasion.

Wie oben beschrieben werden Vakuumregelventile zur Einstellung einer definierten Prozessumgebung in einer Prozesskammer eingesetzt. Die Regelung erfolgt hier typischerweise anhand eines Drucksignals, welches eine Information über den Kammerinnendruck bereitstellt, und anhand einer Zielgrösse, d.h. eines Solldrucks, die mittels der Regelung erreicht werden soll. Die Stellung eines Ventilverschlusses (Ventilteller) wird dann im Rahmen der Regelung so variiert, dass innerhalb eines bestimmten Zeitraums der Solldruck erreicht wird.

Alternativ zur Regelung können Vakuumregelventile auch anhand bekannter Prozessparameter, wie beispielsweise ein zu erreichender Solldruck in der Prozesskammer in einer vorgegebenen Zeit, gesteuert betrieben werden. Hierzu werden z.B. diesbezügliche Sollpositionen für den Ventilteller bereitgestellt und diese Position in ebenfalls vorgegebenen Zeiten angefahren.

Beide obigen Verfahren haben ihre spezifischen Vor- und Nachteile. So kann mittels einer vordefinierten Steuerung ein Solldruck in der Prozesskammer in verhältnismässig kurzer Zeit eingestellt werden, jedoch ist aufgrund eines typischerweise mangelnden Feedbacks (z.B. einer aktuellen Druckinformation) eine Aussage über den tatsächlich vorliegenden Druck nur unter Vorbehalt zu tätigen. Etwaige unerwünschte Einflüsse auf den Produktionsprozess, wie z.B. ein veränderter Gaseinlass oder ein Leck der Prozesskammer bleiben gänzlich unerkannt und führen dann typischerweise zu einer Verminderung der Fertigungsqualität.

In Unterschied zur Steuerung ist eine Regelung des Druckes in einer Prozesskammer zeitintensiver. Ein Feedbacksignal - typischerweise erzeugt von einem Drucksensor, der den aktuell anliegenden Kammerdruck misst - wird mit einer naturgemässen Verzögerung erfasst und verarbeitet. Eine darauf basierende Regelung erfolgt folglich mit einer entsprechenden Verzögerung und führt zu einer entsprechend späteren Einstellung des Solldrucks. Hingegen vermag die Regelung des Solldrucks diesen auch bei variierenden Gaseinlässen oder Druckschwenkungen in der Prozesskammer verlässlich einzustellen. Aufgrund der zuverlässigeren Prozesssicherheit in Hinblick auf den massgebenden Kammerinnendruck, wird in den meisten Fällen eine Regelung des Ventils bevorzugt eingesetzt.

Der Erfindung liegt somit die Aufgabe zugrunde, ein verbessertes Vakuumventil mit einer Regelung bereitzustellen, welches die oben genannten Nachteile zu überwinden vermag.

Insbesondere ist es Aufgabe der Erfindung ein verbessertes Vakuumventil mit einer Regelung bereitzustellen, welches ein verbessertes, d.h. schnelleres und zuverlässigeres, Regelverhalten aufweist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die grundlegende Idee der vorliegenden Erfindung ist es einen ausgeführten Regelprozess in zwei Teilschritte zu unterteilen, um eine Beschleunigung für die den Kammerdruck bestimmende Verschlusspositionierung zu erreichen. In einem ersten Teilschritt wird der Ventilverschluss gesteuert in eine vorbestimmte Vorregelposition versetzt, in einem zweiten Teilschritt erfolgt dann eine Regelung des Kammerdrucks. Ferner werden die insbesondere mehrfach durchgeführten Regelzyklen jeweils überwacht und erfasst um mit einer entsprechenden Referenz verglichen. Basierend auf diesem Vergleich kann dann für nachfolgende Zyklen eine Anpassung der Vorregelposition erfolgen.

Hierdurch lässt sich zum einen ein schnelleres Erreichen des Solldrucks und zum zweiten ein autonomes und sich selbst-anpassendes Regelsystem bereitstellen.

Um das Einregeln eines neuen Arbeitspunktes (z.B. neuer Solldruck in der Prozesskammer) zeitlich zu optimieren wird die Übergangsphase von einem Arbeitspunkt zu einem anderen durch eine geeignet Positionier-Sequenz gesteuert anstatt zu regeln. Die Positionier-Sequenz (Vorregelschritt) bringt den Druck zeitoptimal in die Nähe des neuen Arbeitspunktes. Nach der Positionier-Sequenz wird in einen Closed-Loop Mode umgeschaltet, um den Druck dann genau einzuregeln und zu beizubehalten.

Das Timing für den Vorregelschritt und die verwendete Vorregelposition werden z.B. aus einem Referenzzyklus oder mehreren Referenzzyklen, die im Closed-Loop Mode geregelt werden, gewonnen.

Die Positionier-Sequenz Parameter, insbesondere die Vorregelposition oder eine Vorregelzeitdauer, können nach jedem Regelzyklus für den nächsten Zyklus weiter optimiert werden.

Vorzugsweise ist die Positionier-Sequenz mit einer Flow-Controller Steuerung synchronisiert, d.h. der Vorregelschritt bzw. die Positionier-Sequenz startet mit einer bestimmten Ansteuerung eines Flow-Controllers.

Für das Vorpositionieren sind beispielsweise folgende Parameter erforderlich:
- eingeregelte Verschlussposition für einen neuen Druck (entspricht z.B. der Vorregelposition),
- aktuelle Position des Ventilverschlusses und
- ein Kriterium, nach welchem von der aktuellen Position in die eingeregelte Position zu wechseln ist.

Die aktuelle Position des Ventilverschlusses wird insbesondere in einem vorhergehenden Zyklus verwendet. Für den nachfolgenden Zyklus wird die Position beispielsweise am Zyklusende des vorhergehenden Zyklus bestimmt oder es wird ein Positionsmittelwert (über z.B. 100ms) gebildet. Der letzte Mittelwert, der vor dem nächsten Setpoint (Arbeitspunkt) ermittelt wurde, wird dann gespeichert. Es wäre auch denkbar dass eine Position, die nach einer gewissen Zeit im Regelmode erreicht wird, gespeichert wird. Dadurch können Einflüsse durch Flussänderungen oder durch eine Plasmazündung in der Kammer innerhalb des laufenden Schrittes eliminiert werden.

Die Vorregelposition wird z.B. so gewählt, dass sich der Kammerinnendruck möglichst schnell dem neuen Sollwert annähert. Anderseits soll die Annäherung auch nicht zu schnell erfolgen, damit eine Regel- und Steuerungseinheit in der Lage ist, die Einregelung effizient zu ermöglichen.

Die Erfindung betrifft also ein Ventilsystem bestehend zumindest aus einem Vakuumventil zur Regelung eines Volumen- oder Massenstroms und zum gasdichten Abschluss eines Prozessvolumens und aus einer Regel- und Steuerungseinheit. Das Vakuumventil weist einen Ventilsitz auf, der eine eine Öffnungsachse definierende Ventilöffnung und eine die Ventilöffnung umlaufende erste Dichtfläche aufweist, und weist einen Ventilverschluss auf zum im Wesentlichen gasdichten Verschliessen der Ventilöffnung mit einer zweiten zu der ersten Dichtfläche korrespondierenden Dichtfläche.

Zudem ist eine mit dem Ventilverschluss gekoppelte Antriebseinheit vorgesehen, die derart ausgebildet ist, dass der Ventilverschluss zur Bereitstellung von jeweiligen Verschlusspositionen definiert variierbar und einstellbar ist und von einer Offenposition, in welcher der Ventilverschluss die Ventilöffnung zumindest teilweise freigibt in eine Schliessposition, in welcher die erste Dichtfläche auf die zweite Dichtfläche angedrückt ist und die Ventilöffnung im Wesentlichen gasdicht verschliesst, und zurück verstellbar ist.

Die Regel- und Steuerungseinheit ist zur Ausführung eines Regelzyklus mit einem Vorregelschritt und einem nachfolgenden Regelschritt für den Ventilverschluss konfiguriert. Ein solcher Regelzyklus kann insbesondere mehrfach wiederholt ausgeführt werden, wobei zwischen zwei derartigen Zyklen auch andere Prozessschritte oder -zyklen ausgeführt werden können.

Bei Ausführung des Regelzyklus wird im Rahmen des Vorregelschritts der Ventilverschluss, insbesondere aus der Offenposition, durch entsprechende Ansteuerung der Antriebseinheit in eine definierte aktuelle Vorregelposition gesteuert durch die Regel- und Steuerungseinheit versetzt. Im Vorregelschritt erfolgt somit kein echtes Regeln einer Ventilstellung, sondern der Ventilverschluss wird gezielt mittel Steuerung in einen bestimmten Zustand - in die aktuelle Vorregelposition - gebracht. Die vorgegeben Vorregelposition ist prinzipiell von Zyklus zu Zyklus veränderbar und ein entsprechendes Einstellen der Verschlussposition erfolgt jeweils anhand der aktuell definierten Vorregelposition.

Im Rahmen des Regelschritts wird eine gezielte Variation bzw. Einstellung der Verschlussposition in Abhängigkeit der aktuellen Vorregelposition durch Ansteuerung der Antriebseinheit basierend auf einer aktuell bestimmten Regelgrösse für einen Prozessparameter und auf einer Zielgrösse ausgeführt. Dabei ist insbesondere die Regelgrösse an die Zielgrösse annäherbar. Ein durch eine definierte Positionsänderung des Ventilverschlusses bewirkter Effekt auf die Regelgrösse ist hierbei zumindest teilweise prognostizierbar. In diesem nachfolgenden Schritt erfolgt nun ein echtes geregeltes (closed-loop) Einstellen der Verschlussposition.

Z.B. wird in Reaktion auf einen gemessenen Druck in einer Prozesskammer ein Öffnungsquerschnitt des Ventils in eine bestimmte Richtung verstellt, wobei bei einer Vergrösserung des Querschnitts ein Druckabfall und bei einer Verkleinerung des Querschnitts ein Druckanstieg zu erwarten ist (Prognostizierbarkeit). Ist der Prozessaufbau sehr gut bekannt, kann neben der Richtung (Zunahme und Abnahme des Drucks) der Druckänderung auch ein hierdurch bewirkter Betrag der Druckänderung zumindest grob bekannt sein.

Durch die Zweistufigkeit der Einstellzyklus setzt die Regelung beispielsweise mit einem gewissen zeitlichen Offset ein (Erzeugt durch das zuvor ablaufende gesteuerte Verstellen des Ventilverschlusses), wodurch dann bereits aktuelle Druckdaten aus dem Prozessvolumen vorliegen und die Regelung so direkt einsetzen kann.

Die Regel- und Steuerungseinheit weist erfindungsgemäss auch eine Aktualisierungsfunktionalität auf, die derart konfiguriert ist, dass bei deren Ausführung die Regelgrösse zumindest während eines Teils des Regelzyklus erfasst und darauf basierend ein Istregelverlauf abgeleitet wird. Der Istregelverlauf wird mit einem Referenzregelverlauf verglichen und basierend darauf wird eine Regelabweichung abgeleitet. Es wird ein Unterschied und insbesondere ein Ausmass des Unterschieds bestimmt.

In Abhängigkeit einer Ausprägung der abgeleiteten Regelabweichung und basierend auf dem zumindest teilweise prognostizierbaren Effekt auf die Regelgrösse erfolgt dann eine Anpassung der aktuellen Vorregelposition. In anderen Worten heisst das, dass im Fall einer festgestellten Abweichung, die z.B. einen bestimmten Schwellwert überschreitet, eine Anpassung der Vorregelposition so erfolgen kann, dass hierdurch der Abweichung entgegengewirkt wird.

Die angepasste Vorregelposition wird als die aktuelle Vorregelposition für den Regelzyklus bereitgestellt und/oder hinterlegt. Die aktuelle Vorregelposition wird also entsprechend neu gesetzt und folglich in einem nächsten Regelzyklus als die aktuelle Vorregelposition im Vorregelschritt eingestellt. Eine vormals noch auftretende Abweichung in dem Regelzyklus kann so in einem nächsten Zyklus verringert oder gänzlich vermieden werden.

Die Regel- und Steuerungseinheit ist zudem derart konfiguriert, dass die Aktualisierungsfunktionalität fortlaufend, insbesondere über eine Vielzahl von Regelzyklen während eines Produktionsprozesses mit dem Prozessvolumen, ausführbar ist.

In einer Ausführungsform ist die Aktualisierungsfunktionalität derart ausgestaltet, dass der Referenzregelverlauf durch Erfassen der Regelgrösse bei Ausführung eines ersten Regelzyklus oder eines ersten Regelschritts erzeugt und hinterlegt wird und der Istregelverlauf durch Erfassen der Regelgrösse bei Ausführung eines zweiten Regelzyklus oder eines zweiten Regelschritts abgeleitet wird.

Insbesondere wird der zweite Regelzyklus oder der zweite Regelschritt nachfolgend auf den ersten Regelzyklus bzw. den ersten Regelschritt ausgeführt.

Der Referenzregelverlauf ist beispielsweise ein in einem einzelnen vorangegangenen Zyklus aufgenommener Regelverlauf. Alternativ kann der Referenzregelverlauf auf mehreren im Vorfeld ausgeführten Zyklen basieren oder anhand eines spezifischen Lernprozesses erzeugt sein.

In andern Worten kann in einer Ausführungsform die Regel- und Steuerungseinheit derart ausgestaltet sein, dass der Referenzregelverlauf durch Erfassen der Regelgrösse während Ausführung einer Mehrzahl von Regelzyklen oder einer Mehrzahl von Regelschritten erzeugt und hinterlegt wird, insbesondere wobei eine Mittelung der für ein bestimmtes Zeitintervall oder für einen bestimmten Zeitpunkt des Regelschritts erfassten Regelgrössen erfolgt.

Die Regel- und Steuerungseinheit kann ferner eine Lernfunktionalität zur Erzeugung des Referenzregelverlaufs aufweisen. Die Lernfunktionalität ist dabei derart konfiguriert, dass bei deren Ausführung für eine Durchführung von einer Anzahl von im Wesentlichen gleichartigen Regelzyklen entsprechend eines Sollbetriebs für den Regelzyklus jeweilige Sollpositionen für den Ventilverschluss über zumindest je einen Zeitabschnitt eines jeweiligen Regelzyklus erfasst werden und die erfassten Sollpositionen für den Ventilverschluss mit Bezug zu jeweiligen Zeitabschnitten des Regelzyklus als der Referenzregelverlauf gespeichert werden.

Der Referenzregelverlauf kann in Abhängigkeit der Zielgrösse und einer zulässigen Zeitdauer für die Ausführung des Regelzyklus oder des Vorregelschritts bzw. des Regelschritts, insbesondere des auszuführenden Prozessschrittes, definiert sein.

Gemäss einer Ausführungsform der Erfindung ist die Regel- und Steuerungseinheit derart konfiguriert, dass die aktuelle Vorregelposition derart angepasst wird, dass mit der angepassten Vorregelposition ein richtungsmässig und/oder betragsmässig der Regelabweichung definiert entgegenwirkender Effekt auf die Regelgrösse bzw. den Prozessparameter erzeugt ist. Die Vorregelposition kann so verstellt werden, dass z.B. ein zu geringer Kammerdruck mittels einer verkleinerten Ventilöffnung vorkompensiert wird.

Der Prozessparameter, der durch die Regelgrösse erfasst wird, kann beispielsweise durch eine Druckinformation für das Prozessvolumen verkörpert sein, wobei die Zielgrösse ein im Prozessvolumen zu erreichender Solldruck sein kann und die aktuell bestimmte Regelgrösse einen aktuellen Druck im Prozessvolumen repräsentiert. Hierbei handelt es sich dann um eine Druckregelung für ein Prozessvolumen.

In einer Variante der Erfindung kann die Zielgrösse ein im Prozessvolumen zu erreichender Solldruck sein, wobei die aktuell bestimmte Regelgrösse - beispielsweise zusätzlich zu einer Druckinformation - einen aktuellen Medienzufluss in das Prozessvolumen angibt, insbesondere wobei die aktuell bestimmte Regelgrösse eine aktuelle Druckeinlassgrösse berücksichtigt. Mit dieser zusätzlichen Information kann eine Regelung des Solldrucks mit gesteigerter Genauigkeit und Effizienz erfolgen.

Insbesondere kann mit der aktuelle bestimmten Regelgrösse eine Austrittsinformation hinterlegt sein oder aktuell bestimmt werden, wobei die Austrittsinformation angibt, welche Masse oder welches Volumen eines Mediums (z.B. Prozessgas) pro Zeiteinheit aus dem Prozessvolumen und in Abhängigkeit der Verschlussposition abströmt. Die Austrittsinformation kann dabei massgeblich von einer von einer Vakuumpumpe bereitgestellten Absaugleistung abhängen.

Zur Ausführung des Regelzyklus wird gemäss einer Ausführungsform ein Trigger- oder Startsignal erhalten. Der Vorregelschritt kann also in Abhängigkeit eines Erhalts des Startsignals eingeleitet oder ausgeführt werden. Der Regelzyklus bzw. der Vorregelschritt werden ausgeführt, sobald das Startsignal von der Regel- und Steuerungseinheit erhalten und verarbeitet wird.

Vorzugsweise ist das Startsignal von einem übergeordneten Prozesscontroller erzeugt, wobei der Prozesscontroller ausgebildet ist zur Steuerung eines Produktionsprozesses mit dem Prozessvolumen für eine Mehrzahl gleichartiger Produkte, der Regelzyklus einen entsprechend mehrfach wiederkehrenden Teil des Produktionsprozesses repräsentiert und das Startsignal im Rahmen des Produktionsprozesses entsprechend mehrfach ausgegeben wird.

Der Prozesscontroller kann in diesem Kontext auch eine Synchronisierung von Startsignalausgabe und beispielsweise einer Zuleitung oder Zuleitungsänderung eines Prozessgases bereitstellen. Dadurch kann der Regelprozess abgestimmt mit einem bestimmten Prozessschritt eingeleitet werden und die gesteuerte Verstellung in die Vorregelposition erfolgt mit Beginn des jeweiligen Prozessschrittes, z.B. zusammen mit einer Einleitung eines Prozessgases.

Die Regel- und Steuerungseinheit kann beispielsweise mit einem Drucksensor verbunden sein, wobei ein Ausgangssignal des Drucksensors die aktuell bestimmte Regelgrösse (aktueller Druck in der Prozesskammer) bereitstellt. Alternativ oder zusätzlich kann die Regel- und Steuerungseinheit mit einem Massenströmungsmesser oder einer Massenströmungskontrolleinheit verbunden sein und ein Ausgangssignal des Massenströmungsmesser bzw. der Massenströmungskontrolleinheit stellt die aktuell bestimmte Regelgrösse (z.B. als Information über eine Zustrommenge eines Prozessgases pro Zeit) bereit. Die Regelgrösse muss im zweiten Fall also nicht der Kammerdruck sein, sondern kann auch den aktuellen Gaszufluss repräsentieren.

Vorzugsweise sind der Istregelverlauf und der Referenzregelverlauf in Form einer jeweiligen Regelkurve erfasst.

In einer Ausführungsform sind das Vakuumventil und die Regel- und Steuerungseinheit in integrierter Bauweise ausgeführt.

Alternativ kann die Regel- und Steuerungseinheit strukturell getrennt von dem Vakuumventil ausgebildet sein und in Kommunikationsverbindung mit dem Vakuumventil stehen, insbesondere wobei eine drahtlose Funkverbindung oder eine drahtgebundene Verbindung besteht.

In einer weiteren Funktionalität kann die Regel- und Steuerungseinheit derart konfiguriert sein, dass in Abhängigkeit des Vergleichs des Istregelverlaufs mit dem Referenzregelverlauf eine Prozessinformation erzeugbar ist.

Die Prozessinformation kann in Abhängigkeit der Ausprägung der abgeleiteten Regelabweichung erzeugbar sein, insbesondere wobei die Prozessinformation erzeugt wird falls die Regelabweichung einen vorgegebenen Schwellwert überschreitet.

Die Prozessinformation kann ferner ein Ausgabesignal umfassen, wobei das Ausgabesignal akustisch oder visuell erzeugt ist. Ausserdem kann die Prozessinformation eine eine Qualität für den Regelzyklus angebende Qualitätsinformation aufweisen und anhand dieser Qualitätsinformation kann eine Benutzerausgabe, insbesondere eine Fehlerinformation oder ein Alarmsignal, erzeugbar sein.

Basierend auf der Prozessinformation kann zudem ein unerwünschter Prozesszustand identifiziert werden, insbesondere ein unerwünschter Messenzustrom während des Regelzyklus, insbesondre wobei die Existenz eines Lecks des Prozessvolumens identifizierbar ist.

Die Erfindung betrifft ausserdem eine Regel- und Steuerungseinheit für ein Vakuumventil, wobei das Vakuumventil zur Regelung eines Volumen- oder Massenstroms und zum gasdichten Abschluss eines Prozessvolumens ausgebildet ist und einen verstellbaren Ventilverschluss aufweist.

Erfindungsgemäss ist die Regel- und Steuerungseinheit zur, insbesondere mehrfachen, Ausführung eines Regelzyklus mit einem Vorregelschritt und einem nachfolgenden Regelschritt für den Ventilverschluss konfiguriert. Bei Ausführung des Regelzyklus wird im Rahmen des Vorregelschritts der Ventilverschluss durch entsprechende Ansteuerung einer Antriebseinheit, insbesondere aus einer Offenposition, in eine definierte aktuelle Vorregelposition gesteuert durch die Regel- und Steuerungseinheit versetzt. Im Rahmen des Regelschritts wird eine gezielte Variation bzw. Einstellung der Verschlussposition in Abhängigkeit von der aktuellen Vorregelposition durch Ansteuerung der Antriebseinheit basierend auf einer aktuell bestimmten Regelgrösse für einen Prozessparameter und basierend auf einer Zielgrösse ausgeführt, insbesondere wodurch die Regelgrösse an die Zielgrösse annäherbar ist. Ein durch eine definierte Positionsänderung des Ventilverschlusses bewirkter Effekt auf die Regelgrösse ist dabei zumindest teilweise prognostizierbar.

Die Regel- und Steuerungseinheit weist eine Aktualisierungsfunktionalität auf, die derart konfiguriert ist, dass bei deren Ausführung die Regelgrösse zumindest während eines Teils des Regelzyklus erfasst und auf dieser Basis ein Istregelverlauf abgeleitet wird. Der Istregelverlauf wird mit einem Referenzregelverlauf verglichen und es wird eine Regelabweichung abgeleitet. Das Ableiten der Regelabweichung umfasst auch das allfällige Feststellen, dass keine Abweichung vorliegt.

In Abhängigkeit einer Ausprägung der abgeleiteten Regelabweichung und basierend auf dem zumindest teilweise prognostizierbaren Effekt auf die Regelgrösse erfolgt bei der Aktualisierungsfunktionalität eine Anpassung der aktuellen Vorregelposition und die angepasste Vorregelposition wird als die aktuelle Vorregelposition für den Regelzyklus bereitgestellt und/oder hinterlegt. Es versteht sich entsprechend, dass im Falle dass die Abweichung Null ist auch die Anpassung derart sein kann, dass die aktuelle Vorregelposition durch eine im Wesentlichen identische neue Vorregelposition ersetzt wird.

Die Regel- und Steuerungseinheit ist derart konfiguriert, dass die Aktualisierungsfunktionalität fortlaufend, insbesondere über eine Vielzahl von Regelzyklen während eines Produktionsprozesses mit dem Prozessvolumen, ausführbar ist.

Die Erfindung betrifft weiter ein Verfahren zur Durchführung eines Produktionszyklus mit einem Vakuumventil, wobei das Vakuumventil zur Regelung eines Volumen- oder Massenstroms, insbesondere eines Volumen- oder Massenabflusses aus einem Prozessvolumen, und zum gasdichten Abschluss eines Prozessvolumens ausgebildet und angeordnet ist. Das Vakuumventil weist einen Ventilsitz auf, der eine eine Öffnungsachse definierende Ventilöffnung und eine die Ventilöffnung umlaufende erste Dichtfläche aufweist, und weist zudem einen Ventilverschluss zum im Wesentlichen gasdichten Verschliessen der Ventilöffnung mit einer zweiten zu der ersten Dichtfläche korrespondierenden Dichtfläche auf. Eine mit dem Ventilverschluss gekoppelte Antriebseinheit ist derart ausgebildet, dass der Ventilverschluss zur Bereitstellung von jeweiligen Verschlusspositionen definiert variierbar und einstellbar ist und von einer Offenposition, in welcher der Ventilverschluss die Ventilöffnung zumindest teilweise freigibt in eine Schliessposition, in welcher die erste Dichtfläche auf die zweite Dichtfläche angedrückt ist und die Ventilöffnung im Wesentlichen gasdicht verschliesst, und zurück verstellbar ist.

Im Rahmen des Verfahrens ein Regelzyklus für den Ventilverschluss, insbesondere mehrfach, ausgeführt wird und der Regelzyklus zumindest ein gesteuertes Versetzen des Ventilverschlusses und ein geregeltes Variieren bzw. Einstellen der Verschlussposition umfasst. Das gesteuerte Versetzen des Ventilverschlusses erfolgt in Abhängigkeit eines Erhalts eines Startsignals durch gezielte Ansteuerung der Antriebseinheit, insbesondre aus der Offenposition, in eine definierte aktuelle Vorregelposition, und nachfolgend erfolgt das geregelte Variieren bzw. Einstellen der Verschlussposition in Abhängigkeit von der aktuellen Vorregelposition durch Ansteuern der Antriebseinheit basierend auf einer aktuell bestimmten Regelgrösse für einen Prozessparameter und einer Zielgrösse, insbesondere wodurch die Regelgrösse an die Zielgrösse (13) angenähert wird. Ein durch eine definierte Positionsänderung des Ventilverschlusses bewirkter Effekt auf die Regelgrösse ist dabei zumindest teilweise bekannt bzw. prognostizierbar.

Die Regelgrösse wird zumindest während eines Teils des Regelzyklus erfasst und basierend darauf wird ein Istregelverlauf abgeleitet. Der Istregelverlauf wird mit einem Referenzregelverlauf verglichen und es wird damit eine Regelabweichung abgeleitet. In Abhängigkeit einer Ausprägung der abgeleiteten Regelabweichung und basierend auf dem zumindest teilweise prognostizierbaren Effekt auf die Regelgrösse erfolgt eine Anpassung der aktuellen Vorregelposition und die angepasste Vorregelposition wird als die aktuelle Vorregelposition für den Regelzyklus bereitgestellt und/oder hinterlegt.

Gegenstand der Erfindung ist ferner ein Computerprogrammprodukt, das auf einem maschinenlesbaren Träger gespeichert ist, insbesondere in einer Speichereinheit eines oben beschriebenen Ventilsystems oder in einer genannten Regel- und Steuerungseinheit, mit Programmcode zur Durchführung bzw. Steuerung zumindest bestimmter Schritte des Verfahrens oben genannten Verfahrens. Die Schritte sind
- ein gesteuertes Versetzen des Ventilverschlusses,
- ein geregeltes Variieren bzw. Einstellen der Verschlussposition,
- ein Ableiten eines Istregelverlaufs und ein Vergleichen des Istregelverlaufs mit einem Referenzregelverlauf,
- ein Ableiten einer Regelabweichung,
- ein Anpassen der Vorregelposition in Abhängigkeit einer Ausprägung der abgeleiteten Regelabweichung und basierend auf dem zumindest teilweise prognostizierbaren Effekt auf die Regelgrösse und
- ein Bereitstellen der angepasste Vorregelposition als die aktuelle Vorregelposition für den Regelzyklus.

Insbesondere wird das Programm bzw. der Programmcode in einer elektronischen Datenverarbeitungseinheit, insbesondere der Regel- und Steuerungseinheit, des Ventilsystems oder in der Regel- und Steuerungseinheit ausgeführt. Es kann also eine Aktualisierung eines Regelzyklus durch Ausführung eines entsprechenden (computerimplementierten) Algorithmus erfolgen.

Die erfindungsgemässe Vorrichtung und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine schematische Darstellung einer ersten Ausführungsform eines Vakuumsystems zum erfindungsgemässen gesteuert-geregelten Betrieb einer Prozesskammer;
- Fig. 2a-b: jeweils einen Regelvorgang an einem Vakuumventil zur Einstellung eines neuen Arbeitspunkts;
- Fig. 3a-b: jeweils einen Regelvorgang an einem Vakuumventil zur Regelung bzw. Beibehaltung eines Kammerdrucks bei veränderlichem Fluss; und
- Fig. 4a-c: eine Ausführungsform eines erfindungsgemäss regelbaren Vakuumventils als Pendelventil.

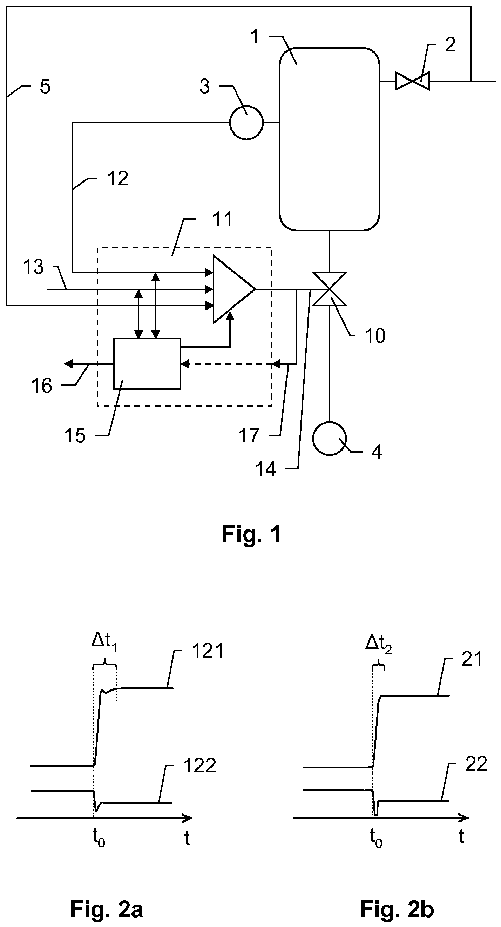

Figur 1 zeigt schematisch einen Aufbau eines Systems zur Bearbeitung eines Objekts, z.B. eines Halbleiterwafers, unter Vakuumbedingungen. Der Aufbau weist eine Prozesskammer 1 und eine Zuleitung in die Prozesskammer auf, wobei die Zuleitung mit einem Gasdurchflussmesser bzw. -regler 2 versehen ist und damit eine Gasmenge, die in die Prozesskammer strömt, gemessen oder die einströmende Gasmenge entsprechend geregelt werden kann. Ferner ist ein Drucksensor 3 vorgesehen, welcher eine Bestimmung des Drucks im Inneren der Prozesskammer (Kammerdruck) erlaubt.

An einer Auslassseite der Prozesskammer 1 ist eine Vakuumpumpe 4 mit der Kammer 1 zu deren Evakuierung verbunden. Zwischen der Vakuumpumpe 4 und der Kammer 1 ist ein einstellbares Vakuumventil 10 zur Steuerung bzw. Regelung des abfliessenden Massenstroms angeordnet. Die (gesteuerte) Einstellbarkeit kann hierbei z.B. mittels eines motorisierten, pneumatischen oder hydraulischen Antriebs des Ventils realisiert sein.

Das System weist erfindungsgemäss eine Regel- und Steuerungseinheit 11 auf, die mit dem Ventil 10 verbunden ist und eine sowohl geregelte als auch gesteuerte Ansteuerung des Ventils 10 anhand eine entsprechenden Inputgrösse 12 und einer Sollgrösse 13 bzw. anhand einer bekannten Vorregelposition für einen Ventilverschluss des Vakuumventils 10 bereitstellt. Die Vorregelposition kann z.B. in Form einer Stellposition in einem internen Speicher der Regel- und Steuerungseinheit 11 hinterlegt sein.

Die Regel- und Steuerungseinheit 11 stellt eine entsprechend erfindungsgemässe Steuerung für das Ventil in Form eines Regelzyklus bereit. Der Regelzyklus weist hierbei zwei nacheinander ablaufende Stufen auf. In einer ersten Stufe - einem Vorregelschritt - wird der Ventilverschluss anhand einer vorbekannten Zwischensollposition (Vorregelposition) in diese Position gestellt. Der Vorregelschritt wird durch ein Startsignal 5 ausgelöst bzw. getriggert. Das Startsignal 5 wird typischerweise von einem Host-Controller ausgegeben, wobei dieser Controller die Steuerung eine übergeordneten Produktionsprozess bereitstellt.

Mittels des Host-Controllers wird beispielsweise eine Bestückung der Prozesskammer mit einem zu bearbeitenden Werkstück, z.B. Halbleiter-Wafer, und im Anschluss die Schaffung einer definierten Atmosphäre in der Prozesskammer gesteuert. Für eine solche Prozessatmosphäre wird typischerweise ein definiertes Prozessgas in die Prozesskammer 10 geleitet - insbesondere via den Gasdurchflussmesser bzw. -regler 2 - und anhand der Vakuumabsaugung und deren Regelung mit dem Ventil 10 der Innendruck in der Prozesskammer auf ein vordefiniertes und Niveau gebracht. Die Erzeugung und Ausgabe des Startsignals 5 ist bevorzugt mit der Prozesssteuerung durch den Host-Controller synchronisiert. Beispielsweise wird das Startsignal 5 nach der Bestückung und mit Einlass des Prozessgases ausgegeben.

Für einen optimierten, d.h. schnellen, Prozesszyklus erfolgt zunächst der Vorregelschritt. Hierdurch wird der Ventilverschluss ohne Regelung und nur anhand einer direkten Steuerung - hier durch Ausgabe eines Stellsignals 14 an das motorisierte Ventil 10 - in die Vorregelposition gebracht. Beispielsweise ist ein entsprechender Offset gegenüber einer Offenposition des Ventilverschlusses hinterlegt, welcher gezielt angefahren werden kann. Der Vorteil einer solchen Vorreglung bzw. positionsbasierten Vorsteuerung liegt in einem deutlich schnelleren Erreichen einer gewünschten Absaugleistung, wodurch auf den gesamten Regelzyklus betrachtet dieser mit einer entsprechend kürzeren Zykluszeit durchlaufen werden kann.

Die Geschwindigkeitssteigerung resultiert auch aus den naturgemäss gegebenen Signalverzögerungen (Delay) für ein reines Regelsystem. Z.B. benötigt der Drucksensor 3 eine gewisse Zeit bis zum Feststellen eines aktuellen Kammerdrucks und für eine entsprechende Signalerzeugung und Ausgabe. D.h. das Regelsystem empfängt die benötigte Regelgrösse ebenfalls mit dieser Verzögerung, woraus sich eine ebensolche Verzögerung für die Regelung und das Erreichen des gewünschten Solldrucks ergibt.

Mittels der Vorregelung kann eine erste Verstellstrecke für den Ventilverschluss ohne ein Feedbacksignal (aktueller Druck) gefahren werden und dann in einen Regelschritt, also ein geregeltes Bewegen des Ventilverschlusses, übergegangen werden. Hierdurch lässt sich oben beschriebene Verzögerung reduzieren, da das Signal des Drucksensors z.B. bereits mit Beginn der späteren Regelphase vorliegt und von dem Regler dann direkt verarbeitet werden kann.

Ein Übergang von dem Vorregelschritt in einen Regelschritt, welcher die zweite Stufe des Regelzyklus bildet, erfolgt bei Erreichen der Vorregelposition. Das Erreichen der Vorregelposition kann z.B. durch eine aktuell und fortlaufend festgestellte Verschlussposition und ein Vergleichen dieser Position mit der vorgegebenen Vorregelposition erkannt werden. Eine entsprechend aktuelle Verschlusspositionsinformation 17 kann von dem Ventil 10 bzw. einem Ventilantrieb an die Regel- und Steuerungseinheit 11 übertragen werden. Insbesondere erfolgt eine solche Informationsübertragung zu einem Regel- und Optimierungsmodul 15 der Regel- und

Steuerungseinheit 11 (angezeigt durch die gestrichelte Verlängerung des logischen Pfeils 17). Sobald die Vorregelposition erreicht wird, erfolgt ein Umschalten von dem Vorregelbetrieb (Steuerung) in den echten Regelbetrieb (Regelschritt).

Alternativ kann das Umschalten zwischen den beiden Schritten auch nach einer vordefinierten und aus dem bekannten Ansteuerungsverhalten des Ventils ableitbaren Dauer für den Vorregelschritt erfolgen. Da das Umschalten hier automatisch nach Ablauf der für den Vorregelschritt vorgesehene Zeit erfolgt, ist hierzu kein weiteres Feedbacksignal erforderlich.

Ausgehend von der dann voreingestellten Vorregelposition wird in dem Regelschritt fortlaufend als Inputgrösse 12, d.h. als aktuell bestimmte Regelgrösse, ein aktuelles Drucksignal 12 des Drucksensors 3 erhalten, womit ein aktueller Druckzustand in der Prozesskammer 1 bekannt bzw. bereitgestellt ist. Der Steuer- und Regeleinheit 11 wird zudem als Soll- oder Zielgrösse 13 ein Solldruck oder ein Solldruckverlauf für einen jeweiligen Bearbeitungsprozess bereitgestellt. Anhand dieser Eingangsgrössen wird mit der Steuer- und Regeleinheit 11 ein Stellsignal 14 erzeugt und an das motorisierte Ventil 10 ausgegeben.

Zur Einstellung eines gewünschten Innendrucks in der Prozesskammer 1 wird im Rahmen des Regelzyklus also die Ventilöffnung des Vakuumventils 10 so variiert, dass ein Gasabfluss aus der Prozesskammer so erfolgt, dass der aktuelle Innendruck an einen Zieldruck angenähert werden kann - in einem ersten Schritt mittels einem gesteuerten, einmaligen Verstellen des Ventilverschlusses in die Vorregelposition und in einem zweiten Schritt mittels einem geregelten Variieren der Verschlussstellung anhand der fortlaufend erfassten Regelgrösse. Hierbei ist insbesondere ein durch eine definierte Positionsänderung des Ventilverschlusses bewirkter Effekt auf die Regelgrösse im Wesentlichen prognostizierbar, wodurch eine gezielte und effiziente Regelung bereitgestellt werden kann.

Beispielsweise soll in einem ersten Zeitabschnitt eines Bearbeitungsprozesses die Ventilöffnung verhältnismässig weit geöffnet eingestellt werden, damit eine möglichst schnelle Absenkung des Innendrucks erfolgt und im weiteren Verlauf der Regelung die Ventilöffnung weniger weit geöffnet eingestellt werden, damit in einen späteren Zeitabschnitt der gewünschte Innendruck durch ein kontrolliertes Abfliessen einer kleineren Gasmenge pro Zeiteinheit eingestellt und gehalten werden kann, wobei insbesondere eine laminare oder molekulare Gasströmung oder aber auch eine Mischform aus beidem vorliegt. Für beide dieser Zeitabschnitte, also für jeden einzustellenden Solldruck, kann ein erfindungsgemässer Regelzyklus mit Vorsteuerung und nachfolgender Regelung hinterlegt sein.

Durch das Variieren der Ventilposition, d.h. der Position des Ventilverschlusses relativ zur Ventilöffnung, wird der Druck im Inneren der Prozesskammer 1 variiert und damit für jeden Regelzyklus ein Regelungsverlauf, insbesondere eine Regelkurve, definiert, also Drücke und/oder Ventilpositionen zu jeweiligen Zeitpunkten in einem bestimmten Zeitintervall. Ein erster Teilabschnitt des Regelungsverlaufs ist erfindungsgemäss jeweils als Vorregelschritt definiert. Ein Bearbeitungsprozess in einer Prozesskammer wird typischerweise vielfach wiederholt in Regelzyklen (mehrfache Ausführung des Regelungsverlaufs) ausgeführt, wobei die Druckregelung dann jeweils entsprechend zyklisch gleichartig ausgeführt werden soll.

Erfindungsgemäss weist die Regel- und Steuerungseinheit 11 eine Aktualisierungsfunktionalität auf. Die Aktualisierungsfunktionalität wird während des Durchlaufens des Regelzyklus oder zumindest während des Regelschrittes ausgeführt. Hierbei wird die empfangene Regelgrösse 12 (z.B. Signal des Drucksensors) zumindest zeitweise erfasst und basierend darauf ein Istregelverlauf abgeleitet. Es werden also beispielsweise ein Druckverlauf und/oder - bei Erhalt der Verschlusspositionsinformation 17 als Teil der Regelgrösse - ein Verschlusspositionsverlauf abgeleitet, d.h. Werte für den Kammerinnendruck und Werte für die Verschlussposition in Bezug zu Regelzeitpunkten.

Im Rahmen der Aktualisierung des Regelzyklus mittels der Aktualisierungsfunktionalität wird der aufgenommene Istregelverlauf mit einem Referenzregelverlauf verglichen und auf dieser Basis eine Regelabweichung abgeleitet. Der Referenzregelverlauf kann dabei einen vorab erfassten und ggf. gezielt und unter definierten und kontrollierten Bedingungen ausgeführten Regelzyklus oder -schritt repräsentieren. Beispielsweise ist der Referenzregelverlauf in Form einer Sollregelkurve hinterlegt.

In Abhängigkeit einer Ausprägung der abgeleiteten Regelabweichung und basierend auf dem im Wesentlichen prognostizierbaren Effekt auf die Regelgrösse 12 wird dann eine Anpassung der Vorregelposition vorgenommen. In anderen Worten kann die Vorregelposition derart neu gesetzt werden, dass der Istregelverlauf im Rahmen der berechneten Abweichung an den Referenzverlauf angenähert wird.

Für die Anpassung der Vorregelposition kann zudem die ebenfalls erfassbare Verschlusspositionsinformation 17 über den ausgeführten Regelschritt berücksichtigt werden. Hierdurch ist eine Zusatzinformation hinsichtlich der Ventilstellung über den Regelschritt hinweg zugänglich und es kann ein Bezug zwischen der abgeleiteten Regelabweichung und der damit verknüpften Verschlussposition hergestellt werden. Hierdurch wird mit der Kenntnis der Auswirkung bestimmter Verschlusspositionen auf das Druckniveau in der Kammer 1 auch eine gezielte und effiziente Anpassung oder Korrektur der Regelreferenz zu bestimmten Zeitpunkten während der Regelung ermöglicht.

Die Regel- und Steuerungseinheit 11 ist derart konfigurierbar, dass die Aktualisierungsfunktionalität fortlaufend, insbesondere über eine Vielzahl von Regelzyklen während eines Produktionsprozesses, ausgeführt wird.

Das mit Figur 1 gezeigte System ermöglicht also zum einen ein schnelles Einregeln eines gewünschten Druckzustandes in der Prozesskammer 1 (durch die Zweistufigkeit der Regelung) und darüber hinaus eine fortlaufende Anpassung des Regelverlaufs derart, dass z.B. bei allfällig auftretenden Abweichungen von einer gewünschten Regelung automatisch eine Korrektur des Regelzyklus durch z.B. Nachstellen der Vorregelposition oder anderer Regelparameter erfolgen kann.

Zur Verifizierung der Prozessintegrität und/oder -qualität kann zudem eine Überprüfungs- bzw. Überwachungsfunktionalität vorgesehen sein.

Anhand der Information über den Referenzverlauf der Regelung kann nun ein aktuell erfasster Regelungsverlauf mit dem Sollverlauf verglichen werden und basierend auf diesem Vergleich eine Information abgeleitet werden, ob die Regelung in gesetzten Grenzen, z.B. innerhalb eines Toleranzbereichs, durchgeführt worden ist oder nicht.

Die Regel- und Steuerungseinheit 11 kann ferner eine Lernfunktion aufweisen, mittels derer die Information bezüglich einer Referenzregelung erstellet werden kann. Hierzu wird ein Produktionszyklus mehrere Male mit gesetzten Sollbedingungen (z.B. Solldruck, Solltemperatur, Druckverlauf, Temperaturverlauf etc) ausgeführt und mit der Regel- und Steuerungseinheit 11 der Druck in der Kammer 1 über die Ventilstellung zur Erreichung des Solldrucks geregelt eingestellt. Während des Durchfahrens dieser Produktionszyklen werden die Ventilstellungen in den einzelnen Zyklen über die Regelzeit gespeichert. Aus der so erzeugbaren Datenmenge wird dann, z.B. mittels Ausgleichsrechung oder Modellierung, eine die einzelnen Datensätze (ein Datensatz je Regelzyklus) vereinende Sollregelinformation abgeleitet.

Die Überprüfungsfunktionalität kann ferner dazu ausgebildet sein in Abhängigkeit eines erfassten aktuellen Regelverlaufs eine Anpassung der zu erreichenden Zielgrösse vorzunehmen, um beispielsweise den Regelprozess derart zu beeinflussen, dass eine festgestellte Abweichung in der Regelung bei nachfolgenden Regelzyklen ausgeglichen wird. In anderen Worten, kann die Überprüfungsfunktionalität die Zielgrösse insbesondere zeitabhängig verändert ausgeben und in dieser Form in den Regelkreis einbringen.

In ähnlicher Wiese kann die Überprüfungsfunktionalität entsprechend auf die aktuell gemessene Regelgrösse (z.B. gemessener Druck) einwirken. Z.B. kann das Vorliegen ein grösseren Drucks als tatsächlich gemessen simuliert werden, um ein schnelleres Absenken des Innendrucks zu bewirken.

Ein Eingriff in den Regelprozess mittels der Überprüfungsfunktionalität kann insbesondere mittels direkten Inputs in den Regler erfolgen, z.B. durch Anpassen von Regelparametern.

Die Regel- und Steuerungseinheit 11 verfügt zudem über einen Ausgabekanal 16. Hiermit kann ein Signal ausgegeben werden, das eine Information über den aktuellen Regelzustand aufweist. So kann ein Benutzer beispielsweise erkennen, ob der Prozess in dessen vorgegebenen Grenzen abläuft oder Abweichungen hiervon vorliegen. Alternativ oder ergänzend kann das Signal einer Recheneinheit oder übergeordneten Prozesssteuerung bereitgestellt werden, wodurch z.B. automatische Anpassungen eines Gesamtprozesses vorgenommen werden können.

Durch die Überprüfungsfunktionalität lässt sich somit nicht nur prüfen, ob ein für das Ventil 10 vorgesehener Regelprozess eingehalten wird, sondern es kann darüber hinaus eine Aussage getroffen werden, ob der Bearbeitungsprozess selbst im Rahmen seiner definierten Randbedingungen abläuft. Wird z.B. eine Abweichung zwischen einer aktuelle aufgenommenen Regelkurve und der für den Prozess hinterlegten Sollregelkurve festgestellt, so kann anhand dieser Abweichung beispielsweise auf das Vorliegen eines Lecks in der Prozesskammer oder einer Zuleitung zur Prozesskammer geschlossen werden und der Prozess entsprechend als fehlerhaft gekennzeichnet werden ohne dass eine Anpassung des Regelzyklus erfolgt. Ohne die erfindungsgemässe Überprüfungsfunktionalität könnte ein solches Leck einfach "überregelt" werden, d.h. das Ventil würde entsprechend derart angesteuert werden, dass in einer vorgegebenen Zeit der Solldruck erreicht wird, ohne dass zunächst äusserlich ein Mangel im Prozessverlauf festgestellt werden würde.

Die Figuren 2a und 2b veranschaulichen jeweils einen Regelvorgang an einem Vakuumventil zur Einstellung eines neuen Arbeitspunkts, d.h. eines neuen Druck-Setpoints. Dem System wird hierbei vorgegeben, dass ein Innendruck einer Vakuumkammer verändert werden soll. Dies kann z.B. zum Ausführen eines bestimmten Prozessschrittes notwendig sein. Typischerweise wird für einen solchen Schritt ein zu erreichender Zieldruck als Sollgrösse vorgegeben.

Die jeweils obere Kurve 121,21 repräsentiert den Druckverlauf in der Vakuumkammer über die Zeit t. Die unterhalb der Druckkurve 121,21 dargestellte zweite Kurve 122,22 repräsentiert die Positionierung oder Stellung des Ventilverschlusses ebenfalls über den dargestellten Zeitraum.

In der Figur 2a ist ein Einstellen des neuen Drucks mittels einer ausschliesslichen Regelung der Verschlussstellung gezeigt. Eine solche Regelung ist dem Prinzip nach aus dem Stand der Technik bekannt.

Zum Zeitpunkt t₀ wird hier die Solländerung des Drucks vorgeschrieben. Als Reaktion auf diese Vorgabe wird die Position des Ventilverschlusses variiert. In der Kurve 122 ist dies durch den Niveauabfall der Kurve 122 unmittelbar nach t₀ verdeutlicht. Durch diese Neustellung des Ventilverschlusses steigt der Druck in der Kammer zunächst entsprechend schnell an (Kurve 121 nach t₀) und nähert sich dem geforderten Druckniveau. Wie gezeigt wird mittels der Regelung eine Gegenbewegung des Ventilverschlusses eingeleitet, damit der Kammerinnendruck nicht über den gewünschten Solldruck ansteigt.

In dem gezeigten Zeitabschnitt Δt₁ pendelt der Kammerdruck sich auf das angestrebte Niveau ein. Dieses Einpendeln ist das Resultat der geregelten Bewegung des Ventilverschlusses. Neigt der Druck z.B. über den Solldruck anzusteigen, so wird eine "Gegenbewegung" durch das Ventil initiiert, d.h. es wird typischerweise eine Vergrösserung der freigegebenen Ventilöffnung eingestellt damit einer durch eine Vakuumpumpe bereitgestellter Unterdruck erhöht wird. Je nach Ausprägung dieser Regelbewegung des Verschlusses erfolgt im Nachgang wiederum eine entgegengesetzt Bewegung, um der allfällig folgenden Tendenz des zu geringen Innendrucks entgegenzuwirken.

Zum direkten Vergleich mit einer sequenziellen Regelung gemäss der Erfindung veranschaulicht die Figur 2b ein solches sequenzielles Regeln mit einem gesteuerten Vorregelschritt (erste Sequenz) und einem nachfolgenden Regelschritt (zweite Sequenz) zum Erreichen des gleichen Solldrucks (wie in Figur 2a).

Zum Zeitpunkt t₀ beginnt hier also nicht direkt ein geregeltes Bewegen des Ventilverschlusses, sondern der Verschluss wird im ersten Schritt gesteuert in eine vordefinierte Ventilposition gestellt (Kurve 22). Für diese Position ist vorzugsweise schon ein damit verbundener Effekt auf den dadurch erzielbaren Innendruck (Kurve 21) bekannt und verknüpft. Wird also der Ventilverschluss in diese Vorregelposition gebracht, so wird der Innendruck entsprechend schnell und gezielt an das letztlich zu erzielende Druckniveau angenähert.

Diese Position kann z.B. mittels eines vorab ausgeführten Lernprozesses für die Steuerung ermittelt worden sein. Aufgrund der oft zyklisch wiederkehrenden Prozessschritte in einer Vakuumkammer kann eine beschriebene Druckänderung in der Kammer bei einer bestimmten Produktion einer Vielzahl gleicher Produkte sehr oft wiederholt durchlaufen werden. Ein Anlernen der Vorregelposition ist hier daher besonders vorteilhaft.

Ein aktives Regeln der Verschlussposition wird z.B. erst nach dem gesteuerten Verstellen des Verschlusses in die Vorregelposition gestartet. Auch ist eine Überlappung des gesteuerten Bewegens und des geregelten Bewegens des Ventilverschlusses möglich. So kann die Regelung beispielsweise bereits kurz vor dem Erreichen der Verschlussposition oder des neuen Solldrucks einsetzen.

Ein nachfolgender Regelschritt ist also im Rahmen der vorliegenden Erfindung nicht ausschliesslich als zeitlich völlig separierter Schritt anzusehen, sondern ist allein zeitlich nachfolgend auf den Vorregelschritt initiiert.

Wie deutlich zu sehen ist, ist die mit der vorliegenden Erfindung erreichbare Dauer Δt₂ zur Einstellung des neuen Drucks deutlich verkürzt im Vergleich zu Δt₁. Ein regelbasierter Einpendelvorgang des Drucks um den Solldruck wird durch das gesteuerte Anfahren der Vorregelposition reduziert bzw. weitgehend vermieden. Dies führt in der Summe aus dem gesteuerten Vorregelschritt und dem nachfolgenden, klassischen Regelschritt zu einem schnelleren Erreichen des gewünschten Drucks.

Ferner stellt die Erfindung eine fortlaufende Aktualisierung der Vorregelposition bereit. Dies ist insbesondere für den typischerweise wiederholt ausgeführten Regelprozess im Rahmen einer z.B. Serienproduktion eines bestimmten Substrats vorteilhaft. Hierbei kann die Vorregelposition für jeden Regelzyklus anhand der aus dem vorangehenden oder mehrerer vorangehender Zyklen gewonnenen Daten eingestellt werden.

Vorzugsweise kann der Druckverlauf 21 eines aktuellen Regelzyklus erfasst werden und mit dem Duckverlauf eines vorangehenden oder mit einem anderen Referenzverlauf verglichen werden. Anhand dieses Vergleichs kann dann eine Korrektur oder Anpassung der gesetzten Vorregelposition erfolgen. Die Anpassung erfolgt hier insbesondere in Abhängigkeit einer festgestellten Abweichung zwischen den beiden Verläufen, d.h. falls die Abweichung einen gewissen Toleranzbereich überschreitet, kann eine Neustellung der Vorregelposition mit einer Richtung und mit einem Betrag derart erfolgen, dass hierdurch ein Gegenwirken zu der Abweichung bereitgestellt wird. Insbesondere ist hierbei ein Effekt einer bestimmten Veränderung der Vorregelposition auf eine dadurch bewirkbare Druckänderung (z.B. zu einem bestimmten Regelzeitpunkt und pro Zeiteinheit) bekannt, also insbesondere für ein bekanntes Prozesssystem entsprechend prognostizierbar. Mit dieser Kenntnis kann die Aktualisierung der Vorregelposition sehr genau und mit optimiertem Effekt erfolgen.

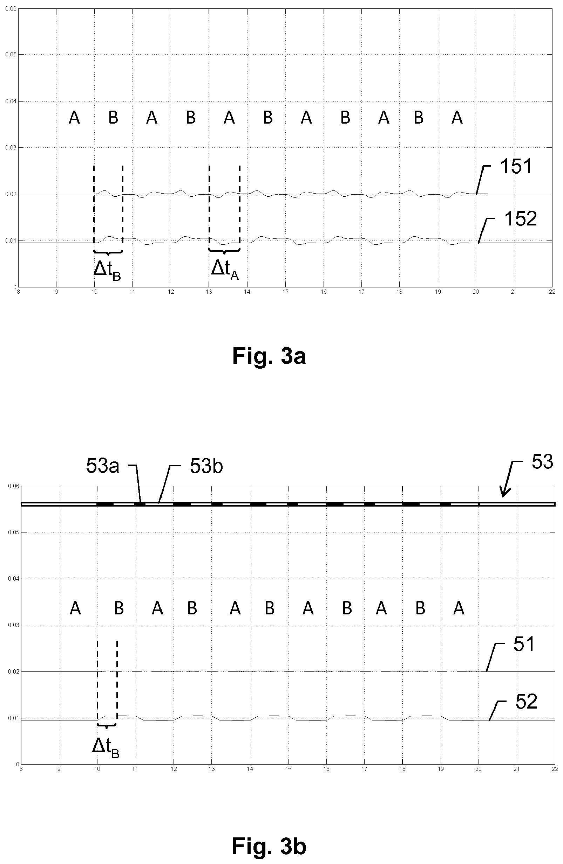

Die Figuren 3a und 3b veranschaulichen jeweils einen Regelvorgang an einem Vakuumventil zur Regelung bzw.

Beibehaltung eines Kammerdrucks bei veränderlichem Fluss z.B. eines Prozessgases. Dem System wird hierbei vorgegeben, dass ein Innendruck einer Vakuumkammer konstant gehalten werden soll. Dies kann z.B. zum Ausführen bestimmter aufeinander folgender Prozessschritte erforderlich sein, bei denen zwar unterschiedliche Prozessgase zum Einsatz kommen, jedoch der Druck in der Kammer zum Bearbeitung auf dem gleichen Niveau gehalten werden soll.

Die Figuren 3a und 3b zeigen den Ablauf einer Bearbeitung in der Vakuumkammer über mehrere Prozesszyklen hinweg. In der gezeigten Variante werden zwei unterschiedliche Bearbeitungen, z.B. Beschichtungsvorgänge, im Wechsel durchgeführt. Dies ist durch die Abfolge der beiden Sequenzen A und B verdeutlicht. Jeder Prozessschritt erstreckt sich jeweils über eine Zeiteinheit, wobei die Sequenzen A mit jeweils gleichen Prozessparametern ablaufen und die Sequenzen B ebenfalls mit jeweils gleichen, insbesondere von A unterschiedlichen (z.B. Zustrom eines anderen Prozessgases), Prozessparametern ablaufen.

Die Figur 3a zeigt den Druckverlauf 151 und den Positionsverlauf 152 bei einer klassischen, ausschliesslichen Regelung des Kammerdrucks mittels der geregelten Einstellung der Position des Ventilverschlusses.

Im Verlauf des Kammerinnendrucks ist ein Umschalten zwischen den jeweiligen Sequenzen A und B deutlich zu erkennen. Fast unmittelbar nach dem Umschaltvorgang, also einer Änderung des Gasflusses in der Kammer, zeigt die Kurve 151 jeweilige Ausschläge. Beim Übergang aus dem Prozesszyklus A in den Zyklus B nimmt der Druck verhältnismässig schnell zu, da beispielsweise mehr Prozessgas pro Zeiteinheit in die Kammer geleitet wird.

Als unmittelbare Reaktion auf den gemessenen Druckanstieg wird die Stellung des Ventilverschlusses geregelt verändert. Beim Übergang von A nach B erfolgt hierfür ein Vergrössern der Durchflussöffnung am Vakuumventil, also eine in positive Richtung ausgeprägte Positionsänderung des Ventilverschlusses. Dies ist anhand der Positionskurve 152 ableitbar. Der Druck nimmt daraufhin wieder ab und sinkt für einen kurzen Zeitabschnitt unter den gewünschten Solldruck. Wiederum in Reaktion auf das starke Absinken wird die Position des Verschlusses nachgeregelt, so dass für den Prozesszyklus B der ursprüngliche Kammerdruck (Solldruck) bei veränderter Ventilöffnung gehalten wird.

Beim Übergang von Prozesszyklus B in den Zyklus A nimmt der Druck verhältnismässig schnell ab und die Regelung der Ventilstellung erfolgt in umgekehrter Richtung (Verkleinerung der Ventildurchflussöffnung) prinzipiell analog zu derjenige beim Übergang von A nach B.

Die Regelschritte werden über die gesamte Prozessdauer (hier: elf Prozesszyklen) entsprechend häufig wiederholt.

Bei diesen Übergängen ist die Zeitdauer bis zum Erreichen des gewünschten Solldrucks relativ gross. Ein Grossteil der jeweiligen Regelzyklen wird dabei durch den Einregelvorgang Δt_{A} und Δt_{B} beansprucht. Nur in einem vergleichsweise kleinen Teil des Zyklus liegt der Solldruck im Wesentlichen konstant vor.

Figur 3b hingegen zeigt den Verlauf des Drucks 51 und der Ventilstellung 52 bei wiederholter Ausführung eines erfindungsgemässen Regelzyklus mit einem gesteuerten Vorregelschritt und einem nachfolgenden Regelschritt. Die Rahmenparameter für die Prozesszyklen A und B sind analog zu denjenigen der Prozesse A und B in Figur 3a.

Deutlich zu erkennen ist die hierbei erreichte gesteigerte Homogenität des Druckverlaufs 51 über den Gesamtprozess. Bei den jeweiligen Übergängen von einem Regelzyklus auf den nachfolgenden Regelzyklus wird ein starkes Ansteigen bzw. Abfallen des Solldrucks in der Kammer weitgehend reduziert bzw. vermieden. Diese Verbesserung wird massgeblich durch den vorangestellten Vorregelschritt erreicht.

Wird dabei z.B. von einem Regelzyklus B in einen Zyklus A übergegangen erhält eine erfindungsgemäss konfigurierte Regel- und Steuerungseinheit ein entsprechendes Triggersignal, z.B. von einem Prozesscontroller. Das Triggersignal bzw. dessen Erzeugung hängt insbesondere von dem Startzeitpunkt für den Zyklus A ab. Mit dem Triggersignal wird der jeweilige Regelzyklus gestartet. Insbesondere ist das Triggersignal mit einem Gaszuflusssystem synchronisiert, damit der Regelzyklus abgestimmt z.B. auf die Zuleitung von einem zusätzlichen Prozessgas oder einer grössren Gasmenge pro Zeit ablaufen kann.

Alternativ ist auch denkbar, dass die Regel- und Steuerungseinheit direkt ein Signal von einem Gasdurchflussmesser bzw. -regler erhält und basierend auf diesem Signal die entsprechende Regelung der Ventilstellung eingeleitet wird.

In einer Ausführungsform können die Daten für das Durchführen eines Regelzyklus z.B. in der Regel- und Steuerungseinheit oder in einem mit dieser Einheit in Kommunikation stehenden Speicher hinterlegt sein. Die Daten umfassen dabei typischerweise die gesteuert anzufahrende Vorregelposition und Parameter zum Übergang vom Vorregelschritt in den Regelschritt (z.B. Zeitpunkt).

Durch den zuerst ablaufenden Vorregelschritt wird hier also die Verschlussstellung bereits in einen Zustand versetzt, in dem der einzustellende Solldruck bereits zumindest angenähert oder angenähert erreicht wird. Nachfolgend wird der Solldruck durch den ausgeführten Regelschritt genau eingestellt und gehalten.

Die Zeitdauer, bis der angeforderte Solldruck bei einer Flussänderung in der Kammer wieder erreicht und gehalten wird, ist mit der erfindungsgemässen Methode deutlich kürzer, d.h. der Solldruck wird schneller eingeregelt (vgl. mit Figur 3a). Hieraus resultiert eine entsprechende Zeitersparnis und damit in Summe ein verkürzter und effizienterer Prozessschritt. Dargestellt ist dies beispielhaft mit der für das Einstellen des Solldrucks im Zyklus B benötigten Zeit Δt_{B}. Beim Übergang von Zyklus B nach A ist die Vorsteuerung bereits so exakt und passend eingestellt, dass kaum Abweichungen im Solldruck entstehen und der Solldruck im Wesentlichen unverändert erhalten bleibt.

Der dargestellte Balken 53 zeigt die zeitliche Verteilung von Vorsteuerphasen 53a, bei denen eine Stellung des Ventilverschlusse in die Vorregelposition erfolgt, und die eigentlichen, "echten" Regelphasen 53b während der Regelzyklen. Die zeitliche Ausdehnung der Vorsteuerphasen 53a unterscheidet sich in den Zyklen A und B.

Gemäss der Erfindung läuft über die gesamte Prozessdauer, d.h. während der Ausführung der elf gezeigten Zyklen, eine Aktualisierung für die jeweiligen Regelzyklen. Für die beiden Zyklen A und B ist hier je eine Aktualisierungsfunktion vorgesehen, d.h. eine Aktualisierungsfunktion für den Zyklus A und eine Aktualisierungsfunktion für den Zyklus B. Beispielhaft wird im Folgenden die Aktualisierungsfunktion für den Zyklus B beschrieben.

Bei der ersten Ausführung des Zyklus B wird der Ventilverschluss in dem Vorregelschritt in eine vordefinierte Stellung gebracht. Diese Vorregelposition kann z.B. mittels eines vorangehenden Lernprozesses ermittelt oder manuell angepasst sein. Nach dem Vorregeschritt erfolgt das fortlaufend geregelte Einstellen der Verschlussposition. Für diesen Zyklus B wird der Regelverlauf, d.h. die Druckverlaufskurve 51 und/oder die Positionsverlaufskurve 52, erfasst. Anhand des so aufgezeichneten Regelverlaufs kann ein Vergleich mit einem Sollregelverlauf für den Zyklus B, insbesondere mit einer gewünschten Regelung, erfolgen und basierend auf diesem Vergleich eine allfällige Abweichung von dem Sollregelverlauf festgestellt werden. In Abhängigkeit von der abgeleiteten Abweichung wird in Folge eine Anpassung der Vorregelposition für die nächste Ausführung oder die nächsten Ausführungen des Zyklus B vorgenommen. Die Anpassung wird insbesondere vorbehaltlich einer Abweichung grösser als eine zulässige Toleranz vorgenommen.

Die Anpassung der Vorregelposition kann dabei so erfolgen, dass bei Feststellen einer Abweichung derart, dass ein Druckanstieg nach Beginn des Zyklus B stärker ausgeprägt ist als ursprünglich vorgesehen, eine neue Vorregelposition ermittelt und abgespeichert wird, die eine vergrösserte Offenstellung des Ventils bei Eintritt in den Zyklus B bereitstellt. Dadurch kann dem übermässigen Druckanstieg entsprechend entgegengewirkt werden. Zudem kann nicht allein die Vorregelposition in ihrer Richtung angepasst sondern auch der Betrag der Änderung anhand eines festgestellten Ausmasses der Abweichung aktualisiert werden.

Bei der zweiten Ausführung des Zyklus B, d.h. nach einem zwischenzeitlich ablaufenden Zyklus A, wird der Ventilverschluss in dem gesteuert ablaufenden Vorregelschritt in die so neu definierte Vorregelposition versetzt. Der Regelschritt erfolgt entsprechend. Auch für diese zweite Ausführung wird wieder der Regelverlauf erfasst. Dieser Verlauf kann nun wahlweise wiederum mit der ursprünglich vorgegebenen Referenzregelung oder mit dem Verlauf des vorangehenden Zyklus B verglichen werden. In anderen Worten ist der Sollregelverlauf repräsentiert durch die vorgegebene Referenzregelung oder durch den Verlauf des vorangehenden Zyklus B.

Wird z.B. durch einen Vergleich von Regelverläufen festgestellt, dass trotz eines überstarken Druckanstiegs die Zeitdauer bis zur Einregelung auf dem Solldruck abnimmt, kann eine Aktualisierung der Vorregelposition auch gezielt eine zunächst verstärkte Abweichung (z.B. ausgeprägtere Druckschwankungen) von einer Referenzregelung beabsichtigen. Durch das Akzeptieren temporär grosser Regelabweichungen lassen sich damit kürzere Prozesszeiten erreichen.

Es kann zudem ein positiver Effekt auf den Regelzyklus B aufgrund der vorangehenden Veränderung der Vorregelposition abgeleitet werden und damit eine Prognostizierbarkeit eines durch die Vorregelposition bewirkten Effekts bestimmt werden.

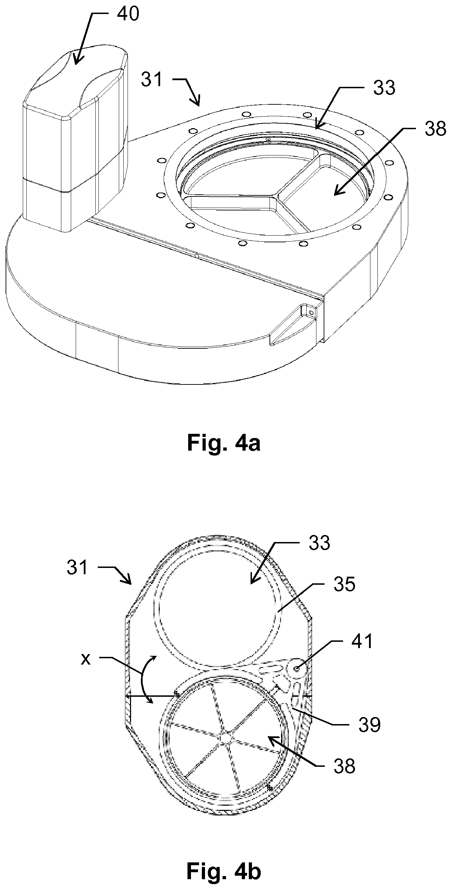

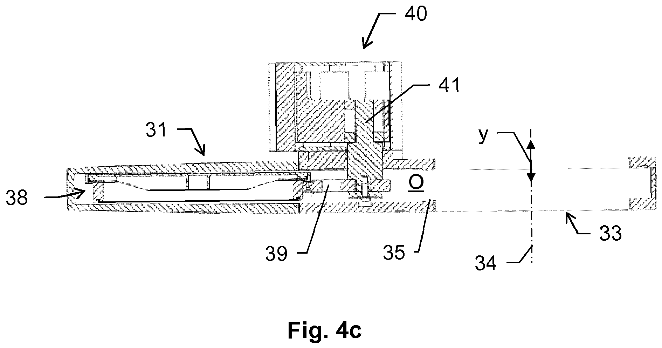

Mit den Figuren 4a bis 4c ist eine mögliche Ausführungsform des erfindungsgemässen Ventils in Form eines Pendelventils dargestellt. Das Ventil zum im Wesentlichen gasdichten Unterbrechen eines Fliesswegs besitzt ein Ventilgehäuse 31, welches eine Öffnung 33 aufweist. Die Öffnung hat einen kreisrunden Querschnitt. In einer Geschlossenstellung des Ventiltellers 38 (Ventilverschluss), ist die Öffnung 33 mittels des Ventiltellers 38 gasdicht verschlossen. Eine Offenstellung O des Ventiltellers 38 ist in den Figuren 3b und 3c veranschaulicht.

Die Öffnung 33 wird von einem Ventilsitz umschlossen. Dieser Ventilsitz wird von einer axial in Richtung des Ventiltellers 38 weisenden und quer zur Öffnungsachse 34 verlaufenden, die Form eines Kreisrings aufweisenden Dichtfläche 35, welche im Ventilgehäuse 31 ausgeformt ist, gebildet.

Ausserdem besitzt das Ventil einen schwenkbaren und zudem im Wesentlichen parallel zur Öffnungsachse 34 verstellbaren Ventilteller 38.

Der Ventilteller 38 ist über einen seitlich an dem Teller angeordneten, sich senkrecht zur Öffnungsachse 34 erstreckenden Arm 39 mit einem elektrischen Antrieb 40 (Motor) verbunden. Dieser Arm 39 befindet sich in der Geschlossenstellung des Ventiltellers 38 ausserhalb des entlang der Öffnungsachse 34 geometrisch projizierten Öffnungsquerschnitts der Öffnung 33.

Ein elektrischer Antrieb 40 ist durch Einsatz eines entsprechenden Getriebes derart ausgebildet, dass der Ventilteller 38 - wie bei einem Pendelventil üblich - mittels einer Querbewegung x des Antriebs 40 quer zur Öffnungsachse 34 und im Wesentlichen parallel über den Querschnitt der Öffnung 33 und senkrecht zur Öffnungsachse 34 in Form einer Schwenkbewegung um eine Schwenkachse 41 zwischen einer Offenstellung O und einer Zwischenstellung schwenkbar und mittels einer parallel zur Öffnungsachse 34 erfolgenden Längsbewegung y des Antriebs 40 linear verschiebbar ist. In der Offenstellung O, ist der Ventilteller 38 in einem seitlich neben der ersten Öffnung 33 angeordneten Verweilabschnitt positioniert, so dass die Öffnung 33 und der Fliessweg freigegeben sind. In der Zwischenstellung ist der Ventilteller 38 über der ersten Öffnung 33 beabstandet positioniert und überdeckt den Öffnungsquerschnitt der Öffnung 33. In der Geschlossenstellung ist die Öffnung 33 gasdicht geschlossen und der Fliessweg unterbrochen, indem ein gasdichter Kontakt zwischen dem Ventilverschluss 38 (Ventilteller) und der Dichtfläche 35 des Ventilsitz besteht.

Um ein automatisiertes und geregeltes Öffnen und Schliessen des Ventils zu ermöglichen, sieht das Ventil eine elektronische Regel- und Steuerungseinheit vor, die derart ausgebildet ist und mit dem Antrieb 40 in derartiger Verbindung steht, dass der Ventilteller 38 zum gasdichten Abschliessen eines Prozessvolumens oder zum Regeln eines Innendrucks dieses Volumens entsprechend verstellbar ist. Eine solche Regeleinheit bildet zusammen mit dem Ventil ein Ventilsystem gemäss der Erfindung.

Wie oben beschrieben wird der Ventilteller 38 zunächst gesteuert in die definierte Vorregelposition versetzt. Die Stellung des Ventiltellers 38 wird dann anhand der Regelgrössen und eines ausgegebenen Steuersignals variabel eingestellt. Als Inputsignal wird eine Information über einen aktuellen Druckzustand in einem mit dem Ventil verbundenen Prozessvolumen erhalten. Zudem kann dem Regler eine weitere Inputgrösse, z.B. ein Massenzustrom in das Volumen, bereitgestellt werden. Anhand dieser Grössen und anhand eines vorgegebenen Solldrucks, der für das Volumen eingestellt bzw. erreicht werden soll, erfolgt dann eine geregelte Einstellung des Ventils über die Zeit eines Regelzyklus, so dass ein Massenabfluss aus dem Volumen mittels des Ventils über die Zeit geregelt werden kann. Hierzu ist hinter dem Ventil eine Vakuumpumpe vorgesehen, d.h. das Ventil ist zwischen der Prozesskammer und der Pumpe angeordnet. Somit kann ein gewünschter Druckverlauf eingeregelt werden.

Durch die Einstellung des Ventilverschlusses 38 wird ein jeweiliger Öffnungsquerschnitt für die Ventilöffnung 33 eingestellt und damit die mögliche Gasmenge eingestellt, die pro Zeiteinheit aus dem Prozessvolumen evakuiert werden kann. Der Ventilverschluss 38 kann zu diesem Zweck eine von einer kreisrunden Form abweichende Form aufweisen, insbesondere um einen möglichst laminaren Medienfluss zu erreichen.

Zur Einstellung des Öffnungsquerschnitts ist der Ventilteller 38 durch die Regel- und Steuerungseinheit mittels der Querbewegung x des Antriebs 40 von der Offenstellung O in die Zwischenstellung und mittels der Längsbewegung y des Antriebs 40 von der Zwischenstellung in die Geschlossenstellung verstellbar. Zum vollständigen Öffnen des Fliesswegs ist der Ventilteller 38 durch die Steuerung mittels der Längsbewegung y des Antriebs 40 von der Geschlossenstellung in der Zwischenstellung und von dort aus mittels der Querbewegung x des Antriebs 40 von der Zwischenstellung in die Offenstellung O verstellbar.

Im vorliegenden Ausführungsbeispiel ist der Antrieb 40 als ein Elektromotor ausgebildet, wobei das Getriebe derart umschaltbar ist, dass ein Antreiben des Antriebs 40 entweder die Querbewegung x oder die Längsbewegung y bewirkt. Der Antrieb 40 und das Getriebe werden von der Regelung elektronisch angesteuert. Derartige Getriebe, insbesondere mit Kulissenschaltungen, sind aus dem Stand der Technik bekannt. Weiters ist es möglich, mehrere Antriebe zum Bewirken der Querbewegung x und der Längsbewegung y einzusetzen, wobei die Steuerung die Ansteuerung der Antriebe übernimmt.

Das präzise Regeln bzw. Einstellen des Durchflusses mit dem beschriebene Pendelventil ist nicht nur durch das schwenkende Verstellen des Ventiltellers 38 zwischen der Offenstellung O und der Zwischenstellung mittels der Querbewegung x, sondern vor allem durch lineares Verstellen des Ventiltellers 38 entlang der Öffnungsachse 34 zwischen der Zwischenstellung, der Geschlossenstellung mittels der Längsbewegung y möglich. Das beschriebene Pendelventil kann für präzise Regelaufgaben eingesetzt werden.

Sowohl der Ventilteller 38 als auch der Ventilsitz besitzen jeweils eine Dichtfläche 35 - eine erste und eine zweite Dichtfläche. Die erste Dichtfläche 35 weist zudem eine Dichtung auf. Diese Dichtung kann beispielsweise als Polymer mittels Vulkanisation auf den Ventilsitz aufvulkanisiert sein. Alternativ kann die Dichtung z.B. als O-Ring in einer Nut des Ventilsitzes ausgeführt sein. Auch kann ein Dichtmaterial auf den Ventilsitz aufgeklebt sein und dadurch die Dichtung verkörpern. In einer alternativen Ausführungsform kann die Dichtung seitens des Ventiltellers 38, insbesondere auf der zweiten Dichtfläche, angeordnet sein. Auch Kombinationen dieser Ausführungen sind denkbar.

Alternativ zu einem Pendelventil wie dargestellt kann das erfindungsgemässe Vakuumventilsystem mit einem anderen Vakuumventiltyp, z.B. einem Klappventil, Schieberventil oder einem sog. Butterfly-Regelventil, realisiert sein. Insbesondere ist das System mit Druckregelventilen zum Einsatz im Vakuumbereich ausgebildet. Ferner sind ebenso Pendelventile einsetzbar, deren Verschluss nur in einer Richtung verstellt werden kann.

Es versteht sich, dass die dargestellten Figuren nur mögliche Ausführungsbeispiele schematisch darstellen. Die verschiedenen Ansätze können erfindungsgemäss ebenso miteinander sowie mit Verfahren und Vorrichtungen zur Druckregelung für Vakuumprozesse des Stands der Technik kombiniert werden.

## Patentansprüche

1. Ventilsystem aus einem Vakuumventil (10) zur Regelung eines Volumen- oder Massenstroms und/oder zum gasdichten Abschluss eines Prozessvolumens (1) und einer Regel- und Steuerungseinheit (11), wobei das Vakuumventil (10) aufweist
• einen Ventilsitz, der eine eine Öffnungsachse (34) definierende Ventilöffnung (33) und eine die Ventilöffnung (33) umlaufende erste Dichtfläche (35) aufweist,
• einen Ventilverschluss (38) zum im Wesentlichen gasdichten Verschliessen der Ventilöffnung (33) mit einer zweiten zu der ersten Dichtfläche (35) korrespondierenden Dichtfläche und
• eine mit dem Ventilverschluss (38) gekoppelte Antriebseinheit (40), die derart ausgebildet ist, dass der Ventilverschluss (38)
□ zur Bereitstellung von jeweiligen Verschlusspositionen definiert variierbar und einstellbar ist und
□ von einer Offenposition (O), in welcher der Ventilverschluss (38) die Ventilöffnung (33) zumindest teilweise freigibt in eine Schliessposition, in welcher die erste Dichtfläche (35) auf die zweite Dichtfläche angedrückt ist und die Ventilöffnung (33) im Wesentlichen gasdicht verschliesst, und zurück verstellbar ist,
**dadurch gekennzeichnet, dass**
die Regel- und Steuerungseinheit (11) zur insbesondere mehrfachen Ausführung eines Regelzyklus mit einem Vorregelschritt (53a) und einem nachfolgenden Regelschritt (53b) für den Ventilverschluss (38) konfiguriert ist, wobei bei Ausführung des Regelzyklus
• im Rahmen des Vorregelschritts (53a) der Ventilverschluss (38) durch entsprechende Ansteuerung der Antriebseinheit (40), insbesondere aus der Offenposition (O), in eine definierte aktuelle Vorregelposition gesteuert durch die Regel- und Steuerungseinheit (11) versetzt wird, und
• im Rahmen des Regelschritts (53b) eine gezielte Variation bzw. Einstellung der Verschlussposition in Abhängigkeit der aktuellen Vorregelposition durch Ansteuerung der Antriebseinheit (40) basierend auf einer aktuell bestimmten Regelgrösse (12) für einen Prozessparameter und auf einer Zielgrösse (13) ausgeführt wird, insbesondere wodurch die Regelgrösse (12) an die Zielgrösse (13) annäherbar ist, wobei ein durch eine definierte Positionsänderung des Ventilverschlusses (38) bewirkter Effekt auf die Regelgrösse (12) zumindest teilweise prognostizierbar ist, und
wobei die Regel- und Steuerungseinheit (11) eine Aktualisierungsfunktionalität aufweist, die derart konfiguriert ist, dass bei deren Ausführung
• die Regelgrösse (12) zumindest während eines Teils des Regelzyklus erfasst und darauf basierend ein Istregelverlauf (21,51) abgeleitet wird,
• der Istregelverlauf (21,51) mit einem Referenzregelverlauf verglichen und eine Regelabweichung abgeleitet wird,
• in Abhängigkeit einer Ausprägung der abgeleiteten Regelabweichung und basierend auf dem zumindest teilweise prognostizierbaren Effekt auf die Regelgrösse (12) eine Anpassung der aktuellen Vorregelposition erfolgt und
• die angepasste Vorregelposition als die aktuelle Vorregelposition für den Regelzyklus bereitgestellt und/oder hinterlegt wird,
wobei die Regel- und Steuerungseinheit (11) derart konfiguriert ist, dass die Aktualisierungsfunktionalität fortlaufend, insbesondere über eine Vielzahl von Regelzyklen während eines Produktionsprozesses mit dem Prozessvolumen (1), ausführbar ist.

2. Ventilsystem nach Anspruch 1,
**dadurch gekennzeichnet, dass**
die Aktualisierungsfunktionalität derart ausgestaltet ist, dass
• der Referenzregelverlauf durch Erfassen der Regelgrösse (12) bei Ausführung eines ersten Regelzyklus oder eines ersten Regelschritts erzeugt und hinterlegt wird und
• der Istregelverlauf (21,51) durch Erfassen der Regelgrösse (12) bei Ausführung eines zweiten Regelzyklus oder eines zweiten Regelschritts abgeleitet wird,
insbesondere wobei der zweite Regelzyklus oder der zweite Regelschritt nachfolgend auf den ersten Regelzyklus bzw. den ersten Regelschritt ausgeführt wird.

3. Ventilsystem nach Anspruch 1 oder 2,
**dadurch gekennzeichnet, dass**
die Regel- und Steuerungseinheit (11) derart ausgestaltet ist, dass der Referenzregelverlauf durch Erfassen der Regelgrösse (12) während Ausführung einer Mehrzahl von Regelzyklen oder einer Mehrzahl von Regelschritten erzeugt und hinterlegt wird, insbesondere wobei eine Mittelung der für ein bestimmtes Zeitintervall oder für einen bestimmten Zeitpunkt des Regelschritts erfassten Regelgrössen erfolgt.

4. Ventilsystem nach einem der Ansprüche 1 bis 3,
**dadurch gekennzeichnet, dass**
die Regel- und Steuerungseinheit (11) eine Lernfunktionalität zur Erzeugung des Referenzregelverlaufs aufweist, wobei die Lernfunktionalität derart konfiguriert ist, dass bei deren Ausführung
• für eine Durchführung von einer Anzahl von im Wesentlichen gleichartigen Regelzyklen entsprechend eines Sollbetriebs für den Regelzyklus jeweilige Sollpositionen für den Ventilverschluss (38) über zumindest je einen Zeitabschnitt eines jeweiligen Regelzyklus erfasst werden und
• die erfassten Sollpositionen für den Ventilverschluss (38) mit Bezug zu jeweiligen Zeitabschnitten des Regelzyklus als der Referenzregelverlauf gespeichert werden.

5. Ventilsystem nach einem der Ansprüche 1 bis 4,
**dadurch gekennzeichnet, dass**
die Regel- und Steuerungseinheit (11) derart konfiguriert ist, dass die aktuelle Vorregelposition derart angepasst wird, dass mit der angepassten Vorregelposition ein richtungsmässig und/oder betragsmässig der Regelabweichung definiert entgegenwirkender Effekt auf die Regelgrösse (12) erzeugt ist.

6. Ventilsystem nach einem der Ansprüche 1 bis 5,
**dadurch gekennzeichnet, dass**
der Vorregelschritt (53a) in Abhängigkeit eines Erhalts eines Startsignals (5) eingeleitet oder ausgeführt wird.

7. Ventilsystem nach Anspruch 6,
**dadurch gekennzeichnet, dass**
das Startsignal (5) von einem übergeordneten Prozesscontroller erzeugt ist, wobei
• der Prozesscontroller ausgebildet ist zur Steuerung eines Produktionsprozesses mit dem Prozessvolumen für eine Mehrzahl gleichartiger Produkte,
• der Regelzyklus einen entsprechend mehrfach wiederkehrenden Teil des Produktionsprozesses repräsentiert und
• das Startsignal (5) im Rahmen des Produktionsprozesses entsprechend mehrfach ausgegeben wird.

8. Ventilsystem nach einem der Ansprüche 1 bis 7,
**dadurch gekennzeichnet, dass**
• der Istregelverlauf (21,51) und/oder der Referenzregelverlauf in Form einer Regelkurve erfasst ist,
und/oder
• der Referenzregelverlauf in Abhängigkeit der Zielgrösse (13) und einer zulässigen Zeitdauer für den Regelzyklus oder für den Vorregelschritt (53a) bzw. den Regelschritt (53b) definiert ist.

9. Ventilsystem nach einem der Ansprüche 1 bis 8,
**dadurch gekennzeichnet, dass**
• der Prozessparameter durch eine Druckinformation für das Prozessvolumen (1) verkörpert ist,
• die Zielgrösse (13) ein im Prozessvolumen (1) zu erreichender Solldruck ist und
• die aktuell bestimmte Regelgrösse (12) einen aktuellen Druck im Prozessvolumen (1) repräsentiert.

10. Ventilsystem nach einem der Ansprüche 1 bis 9,
**dadurch gekennzeichnet, dass**
• die Zielgrösse (13) ein im Prozessvolumen (1) zu erreichender Solldruck ist und
• die aktuell bestimmte Regelgrösse (12) einen aktuellen Medienzufluss in das Prozessvolumen (1) angibt, insbesondere wobei die aktuell bestimmte Regelgrösse eine aktuelle Druckeinlassgrösse berücksichtigt.

11. Ventilsystem nach einem der Ansprüche 1 bis 10,
**dadurch gekennzeichnet, dass**
mit der aktuelle bestimmten Regelgrösse (12) eine Austrittsinformation hinterlegt ist oder aktuell bestimmt wird, wobei die Austrittsinformation angibt, welche Masse oder welches Volumen eines Mediums pro Zeiteinheit aus dem Prozessvolumen (1) und in Abhängigkeit der Verschlussposition abströmt.

12. Ventilsystem nach einem der Ansprüche 1 bis 11,
**dadurch gekennzeichnet, dass**
die Regel- und Steuerungseinheit (11) verbunden ist
• mit einem Drucksensor (3) und ein Ausgangssignal des Drucksensors die aktuell bestimmte Regelgrösse (12) bereitstellt, und/oder
• mit einem Massenströmungsmesser (2) oder einer Massenströmungskontrolleinheit (2) und ein Ausgangssignal des Massenströmungsmesser bzw. der Massenströmungskontrolleinheit die aktuell bestimmte Regelgrösse (12) bereitstellt.

13. Regel- und Steuerungseinheit (11) für ein Vakuumventil (10), wobei das Vakuumventil (10) zur Regelung eines Volumen- oder Massenstroms und/oder zum gasdichten Abschluss eines Prozessvolumens (1) ausgebildet ist und einen verstellbaren Ventilverschluss aufweist,
**dadurch gekennzeichnet, dass**
die Regel- und Steuerungseinheit (11) zur, insbesondere mehrfachen, Ausführung eines Regelzyklus mit einem Vorregelschritt (53a) und einem nachfolgenden Regelschritt (53b) für den Ventilverschluss (38) konfiguriert ist, wobei bei Ausführung des Regelzyklus
• im Rahmen des Vorregelschritts (53a) der Ventilverschluss (38) durch entsprechende Ansteuerung einer Antriebseinheit (40), insbesondere aus einer Offenposition (O), in eine definierte aktuelle Vorregelposition gesteuert durch die Regel- und Steuerungseinheit (11) versetzt wird, und
• im Rahmen des Regelschritts (53b) eine gezielte Variation bzw. Einstellung der Verschlussposition in Abhängigkeit von der aktuellen Vorregelposition durch Ansteuerung der Antriebseinheit (40) basierend auf einer aktuell bestimmten Regelgrösse (12) für einen Prozessparameter und auf einer Zielgrösse (13) ausgeführt wird, insbesondere wodurch die Regelgrösse (12) an die Zielgrösse (13) annäherbar ist, wobei ein durch eine definierte Positionsänderung des Ventilverschlusses (38) bewirkter Effekt auf die Regelgrösse (12) zumindest teilweise prognostizierbar ist,
wobei die Regel- und Steuerungseinheit (11) eine Aktualisierungsfunktionalität aufweist, die derart konfiguriert ist, dass bei deren Ausführung
• die Regelgrösse (12) zumindest während eines Teils des Regelzyklus erfasst und darauf basierend ein Istregelverlauf (21,51) abgeleitet wird,
• der Istregelverlauf (21,51) mit einem Referenzregelverlauf verglichen und eine Regelabweichung abgeleitet wird,
• in Abhängigkeit einer Ausprägung der abgeleiteten Regelabweichung und basierend auf dem zumindest teilweise prognostizierbaren Effekt auf die Regelgrösse (12) eine Anpassung der aktuellen Vorregelposition erfolgt und
• die angepasste Vorregelposition als die aktuelle Vorregelposition für den Regelzyklus bereitgestellt und/oder hinterlegt wird,
wobei die Regel- und Steuerungseinheit (11) derart konfiguriert ist, dass die Aktualisierungsfunktionalität fortlaufend, insbesondere über eine Vielzahl von Regelzyklen während eines Produktionsprozesses mit dem Prozessvolumen (1), ausführbar ist.

14. Verfahren zur Durchführung eines Produktionszyklus mit einem Vakuumventil (10), wobei das Vakuumventil (10) zur Regelung eines Volumen- oder Massenstroms und/oder zum gasdichten Abschluss eines Prozessvolumens (1) ausgebildet ist und aufweist
• einen Ventilsitz, der eine eine Öffnungsachse (34) definierende Ventilöffnung (33) und eine die Ventilöffnung (33) umlaufende erste Dichtfläche (35) aufweist,
• einen Ventilverschluss (38) zum im Wesentlichen gasdichten Verschliessen der Ventilöffnung (33) mit einer zweiten zu der ersten Dichtfläche korrespondierenden Dichtfläche, und
• eine mit dem Ventilverschluss (38) gekoppelte Antriebseinheit (40), die derart ausgebildet ist, dass der Ventilverschluss (38)
□ zur Bereitstellung von jeweiligen Verschlusspositionen definiert variierbar und einstellbar ist und
□ von einer Offenposition (O), in welcher der Ventilverschluss (38) die Ventilöffnung (33) zumindest teilweise freigibt in eine Schliessposition, in welcher die erste Dichtfläche (35) auf die zweite Dichtfläche angedrückt ist und die Ventilöffnung (33) im Wesentlichen gasdicht verschliesst, und zurück verstellbar ist,
wobei im Rahmen des Verfahrens
• ein Regelzyklus für den Ventilverschluss, insbesondere mehrfach, ausgeführt wird und der Regelzyklus zumindest umfasst
□ ein gesteuertes Versetzen des Ventilverschlusses in Abhängigkeit eines Erhalts eines Startsignals durch gezielte Ansteuerung der Antriebseinheit (40), insbesondre aus der Offenposition, in eine definierte aktuelle Vorregelposition, und nachfolgend
□ ein geregeltes Variieren bzw. Einstellen der Verschlussposition in Abhängigkeit von der aktuellen Vorregelposition durch Ansteuern der Antriebseinheit (40) basierend auf einer aktuell bestimmten Regelgrösse (12) für einen Prozessparameter und einer Zielgrösse (13), insbesondere wodurch die Regelgrösse (12) an die Zielgrösse (13) angenähert wird, wobei ein durch eine definierte Positionsänderung des Ventilverschlusses bewirkter Effekt auf die Regelgrösse zumindest teilweise prognostizierbar ist,
• die Regelgrösse (12) zumindest während eines Teils des Regelzyklus erfasst und darauf basierend ein Istregelverlauf (21,51) abgeleitet wird,
• der Istregelverlauf (21,51) mit einem Referenzregelverlauf verglichen und eine Regelabweichung abgeleitet wird,
• in Abhängigkeit einer Ausprägung der abgeleiteten Regelabweichung und basierend auf dem zumindest teilweise prognostizierbaren Effekt auf die Regelgrösse (12) eine Anpassung der aktuellen Vorregelposition erfolgt und
• die angepasste Vorregelposition als die aktuelle Vorregelposition für den Regelzyklus bereitgestellt und/oder hinterlegt wird.

15. Computerprogrammprodukt, das auf einem maschinenlesbaren Träger gespeichert ist, insbesondere in einer Speichereinheit eines Ventilsystems nach einem der Ansprüche 1 bis 12 oder einer Regel- und Steuerungseinheit (11) nach Anspruch 13, mit Programmcode zur Durchführung bzw. Steuerung zumindest der folgenden Schritte des Verfahrens nach Anspruch 14
• ein gesteuertes Versetzen des Ventilverschlusses,
• ein geregeltes Variieren bzw. Einstellen der Verschlussposition,
• ein Ableiten eines Istregelverlaufs und Vergleichen mit einem Referenzregelverlauf,
• ein Ableiten einer Regelabweichung,
• ein Anpassen der Vorregelposition in Abhängigkeit einer Ausprägung der abgeleiteten Regelabweichung und basierend auf dem zumindest teilweise prognostizierbaren Effekt auf die Regelgrösse und
• ein Bereitstellen der angepasste Vorregelposition als die aktuelle Vorregelposition für den Regelzyklus,
insbesondere wobei das Programm in einer elektronischen Datenverarbeitungseinheit, insbesondere der Regel- und Steuerungseinheit (11), eines Ventilsystems nach einem der Ansprüche 1 bis 12 oder einer Regel- und Steuerungseinheit (11) nach einem Anspruch 13 ausgeführt wird.
